(19) Europäisches Patentamt
European Patent Office
Office européen des brevets

(11) **EP 4 648 305 A2**

(12) **EUROPEAN PATENT APPLICATION**
published in accordance with Art. 153(4) EPC

(43) Date of publication:
**12.11.2025 Bulletin 2025/46**

(21) Application number: **24733490.7**

(22) Date of filing: **04.01.2024**

(51) International Patent Classification (IPC):
***H04B 7/08*** *(2006.01)* ***H04W 72/231*** *(2023.01)*
***H04W 72/232*** *(2023.01)* ***H04W 72/04*** *(2023.01)*
***H04W 72/12*** *(2023.01)* ***H04B 7/0413*** *(2017.01)*

(52) Cooperative Patent Classification (CPC):
**H04B 7/0413; H04B 7/08; H04W 72/04; H04W 72/12; H04W 72/231; H04W 72/232**

(86) International application number:
**PCT/KR2024/000164**

(87) International publication number:
**WO 2024/147653 (11.07.2024 Gazette 2024/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.01.2023 KR 20230002494**
**16.02.2023 US 202363446302 P**

(71) Applicant: **LG Electronics Inc.**
**Seoul 07336 (KR)**

(72) Inventors:
- **CHUNG, Jaehoon**
  **Seoul 06772 (KR)**
- **KANG, Jiwon**
  **Seoul 06772 (KR)**
- **KIM, Hyungtae**
  **Seoul 06772 (KR)**

(74) Representative: **Plasseraud IP**
**104 Rue de Richelieu**
**CS92104**
**75080 Paris Cedex 02 (FR)**

(54) **METHOD AND DEVICE FOR TRANSMITTING/RECEIVING SIGNAL IN WIRELESS COMMUNICATION SYSTEM**

(57) A method of receiving a signal by a user equipment (UE) includes receiving downlink control information (DCI) for downlink scheduling through a physical downlink control channel (PDCCH), and receiving a physical downlink shared channel (PDSCH) based on the DCI, wherein, based on the DCI including a specific field, the UE selects at least one of a plurality of transmission configuration index (TCI) states maintained in the UE, based on the specific field, and receives the PDSCH based on the selected at least one TCI state, and based on the DCI not including the specific field, the UE receives the PDSCH based on all of the plurality of TCI states maintained in the UE.

**FIG. 10**

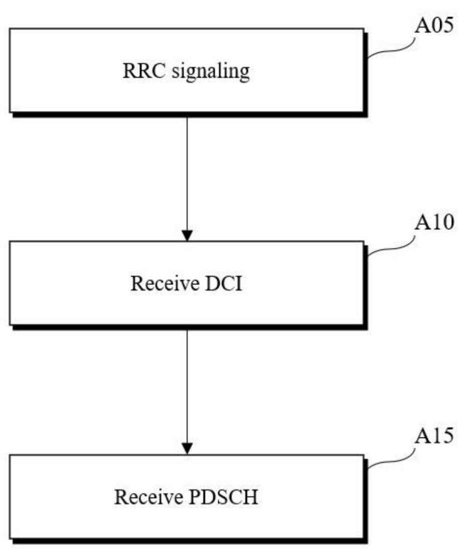


EP 4 648 305 A2

## Description

### TECHNICAL FIELD

The disclosure relates to a wireless communication system, and more particularly, to a method and apparatus for transmitting/receiving an uplink/downlink wireless signal in a wireless communication system.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

### DISCLOSURE

### TECHNICAL PROBLEM

An object of the disclosure is to provide a method of efficiently performing wireless signal transmission/reception procedures and an apparatus therefor.

Other technical objects may be inferred from the detailed description.

### TECHNICAL SOLUTION

According to an aspect of the disclosure, a method of receiving a signal by a user equipment (UE) in a wireless communication system includes receiving downlink control information (DCI) for downlink scheduling through a physical downlink control channel (PDCCH), and receiving a physical downlink shared channel (PDSCH) based on the DCI. Based on the DCI including a specific field, the UE may select at least one of a plurality of transmission configuration index (TCI) states maintained in the UE, based on the specific field, and receive the PDSCH based on the selected at least one TCI state. Based on the DCI not including the specific field, the UE may receive the PDSCH based on all of the plurality of TCI states maintained in the UE.

The UE may receive information regarding whether the DCI includes the specific field through radio resource control (RRC) signaling.

Based on a reception timing of the PDSCH being prior to a time interval for quasi-co-location (QCL), the UE may receive the PDSCH by selecting one of the plurality of TCI states. The UE may receive the PDSCH by selecting the first TCI state from among the plurality of TCI states.

The number of TCI states maintained by the UE may be 2.

The UE may receive another DCI including a TCI field. Based on the TCI field, at least one of the plurality of TCI states maintained in the UE may be configured or changed. Based on a codepoint of the TCI field being related to one TCI state, the UE may change one of the plurality of TCI states based on the codepoint of the TCI field and maintain remaining TCI states without change. An application time of the TCI field may be determined based on a beam application time (BAT).

At least one of the plurality of TCI states may be related to a multi-transmission reception point (TRP) operation.

According to another aspect of the disclosure, a computer-readable recording medium recording a program for performing the method of receiving a signal may be provided.

According to another aspect of the disclosure, a UE configured to perform the method of receiving a signal may be provided.

According to another aspect of the disclosure, a device configured to control a UE to perform the method of receiving a signal may be provided.

According to another aspect of the disclosure, a method of transmitting a signal by a base station (BS) in a wireless communication system includes transmitting downlink control information (DCI) for downlink scheduling through a physical downlink control channel (PDCCH) to a user equipment (UE), and transmitting a physical downlink shared channel (PDSCH) based on the DCI to the UE. Based on the DCI including a specific field, the BS may select at least one of a plurality of transmission configuration index (TCI) states maintained in the UE based on the specific field, and transmit the PDSCH based on the selected at least one TCI state. Based on the DCI not including the specific field, the BS may transmit the PDSCH based on the plurality of TCI states maintained in the UE.

According to another aspect of the disclosure, a BS configured to perform the method of transmitting a signal may be provided.

ADVANTAGEOUS EFFECTS

According to the disclosure, wireless signal transmission and reception can be efficiently performed in a wireless communication system.
Other technical effects may be inferred from the detailed description.

## BRIEF DESCRIPTION OF THE DRAWINGS

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot.

FIG. 5 illustrates an exemplary physical downlink shared channel (PDSCH) and ACK/NACK transmission and reception process.

FIG. 6 illustrates an exemplary physical uplink shared channel (PUSCH) transmission process.

FIG. 7 shows an example of a CSI related procedure.

FIG. 8 is a diagram for explaining a concept of Unified TCI framework.

FIG. 9 is a diagram illustrating signal transmission and reception between a UE and a network in a wireless communication system that supports the unified TCI framework according to an embodiment.

FIG. 10 is a diagram for explaining a UE operation according to an embodiment.

FIG. 11 is a diagram for explaining a BS operation according to an embodiment.

FIGs. 12 to 15 illustrate an example of a communication system 1 and wireless devices applied to the disclosure.

FIG. 16 illustrates an exemplary discontinuous reception (DRX) operation applicable to the disclosure.

## MODE FOR DISCLOSURE

Embodiments of the disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.
As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the disclosure, for simplicity, this technology will be referred to as NR (New Radio or New RAT).

For the sake of clarity, 3GPP NR is mainly described, but the technical idea of the disclosure is not limited thereto.

In the disclosure, the term "set/setting" may be replaced with "configure/configuration", and both may be used interchangeably. Further, a conditional expression (e.g., "if", "in a case", or "when") may be replaced by "based on that" or "in a state/status". In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, and so on are distinguished from each other and indexed, for convenience of description, which does not mean that each of them necessarily constitutes an independent invention or that each of them should be implemented only individually. Unless explicitly contradicting each other, it may be derived/understood that at least some of the sections, embodiments, examples, options, methods, schemes, and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S 108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: Number of symbols in a slot<br>* $N^{frame,u}_{slot}$: Number of slots in a frame<br>* $N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

FIG. 4 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured by higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters.

- controlResourceSetId: A CORESET related to an SS.
- monitoringSlotPeriodicityAndOffset: A PDCCH monitoring periodicity (in slots) and a PDCCH monitoring offset (in slots).
- monitoringSymbolsWithinSlot: PDCCH monitoring symbols in a slot (e.g., the first symbol(s) of a CORESET).
- nrofCandidates: The number of PDCCH candidates (one of 0, 1, 2, 3, 4, 5, 6, and 8) for each AL={1, 2, 4, 8, 16}.

  * An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type 1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |

(continued)

| DCI format | Usage |
|---|---|
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.

- SR(Scheduling Request): Information used to request UL-SCH resources.
- HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.
- CSI (Channel State Information): Feedback information for a DL channel. Multiple input multiple output (MIMO)-related feedback information includes an RI and a PMI.

Table 5 illustrates exemplary PUCCH formats. PUCCH formats may be divided into short PUCCHs (Formats 0 and 2) and long PUCCHs (Formats 1, 3, and 4) based on PUCCH transmission durations.

[Table 5]

| PUCCH format | Length in OFDM symbols $N_{\text{symb}}^{\text{PUCCH}}$ | Number of bits | Usage | Etc |
|---|---|---|---|---|
| 0 | 1-2 | ≤2 | HARQ, SR | Sequence selection |
| 1 | 4 - 14 | ≤2 | HARQ, [SR] | Sequence modulation |
| 2 | 1-2 | >2 | HARQ, CSI, [SR] | CP-OFDM |
| 3 | 4 - 14 | >2 | HARQ, CSI, [SR] | DFT-s-OFDM (no UE multiplexing) |
| 4 | 4 - 14 | >2 | HARQ, CSI, [SR] | DFT-s-OFDM (Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the UE transmits a positive SR, the UE transmits the PUCCH of PUCCH format 0 in PUCCH resources for a corresponding SR configuration.

PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).

PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBS, and conveys UCI of more than 2 bits. In other words, PUCCH resources of PUCCH format 3 do not include an OCC. Modulation symbols are transmitted in TDM with the DMRS.

PUCCH format 4 supports multiplexing of up to 4 UEs in the same PRBS, and conveys UCI of more than 2 bits. In other words, PUCCH resources of PUCCH format 3 include an OCC. Modulation symbols are transmitted in TDM with the DMRS.

At least one of one or two or more cells configured in the UE may be configured for PUCCH transmission. At least the primary cell may be configured as a cell for PUCCH transmission. At least one PUCCH cell group may be configured in a UE based on at least one cell for which PUCCH transmission is configured, and each PUCCH cell group includes one or more cells. A PUCCH cell group may be simply referred to as a PUCCH group. PUCCH transmission may be configured for a SCell as well as the primary cell. The primary cell belongs to the primary PUCCH group, and the PUCCH-SCell to which PUCCH transmission is configured belongs to the secondary PUCCH group. The PUCCH on the primary cell may be used for cells belonging to the primary PUCCH group, and the PUCCH on the PUCCH-SCell may be used for cells belonging to the secondary PUCCH group.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

FIG. 5 illustrates an exemplary ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.

- Frequency domain resource assignment: Indicates an RB set assigned to a PDSCH.
- Time domain resource assignment: Indicates K0 and the starting position (e.g. OFDM symbol index) and length (e.g. the number of OFDM symbols) of the PDSCH in a slot
- PDSCH-to-HARQ_feedback timing indicator: Indicates K1.
- HARQ process number (4 bits): Indicates the HARQ process ID of data (e.g., a PDSCH or TB).
- PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter maxNrofCodeWordsScheduledByDCI indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bitwise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). DCI format 1_0 or 1_1 may include the following information.

- Frequency domain resource assignment: Indicates an RB set assigned to the PUSCH.
- Time domain resource assignment: Indicates a slot offset K2 and the starting position (e.g. OFDM symbol index) and duration (e.g. the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

<u>CSI related operation</u>

FIG. 7 shows an example of a CSI related procedure.

The UE receives configuration information related to CSI from the BS via RRC signaling (710). The CSI-related configuration information may include at least one of channel state information-interference measurement (CSI-IM)-related information, CSI measurement-related information, CSI resource configuration-related information, CSI-RS resource-related information, or CSI report configuration-related information.

- A CSI-IM resource may be configured for interference measurement (IM) of the UE. In the time domain, the CSI-IM resource set may be configured periodic, semipersistent, or aperiodic. The CSI-IM resource may be configured to zero power (ZP)-CSI-RS for the UE. ZP-CSI-RS may be configured to be distinguished from non-zero power (NZP)-CSI-RS.
- The UE may assume that CSI-RS resource(s) for channel measurement configured for one CSI reporting and CSI-IM/NZP CSI-RS resource(s) for interference measurement have a QCL relationship with respect to 'QCL-TypeD' for each resource (when NZP CSI-RS resource(s) are used for interference measurement).
- CSI resource configuration may include at least one of a CSI-IM resource for interference measurement, an NZP CSI-RS resource for interference measurement, and an NZP CSI-RS resource for channel measurement. The channel measurement resource (CMR) may be a NZP CSI-RS for CSI acquisition, and the interference measurement resource (IMR) may be an NZP CSI-RS for CSI-IM and IM.
- A CSI-RS may be configured for one or more UEs. Different CSI-RS configurations may be provided for each UE, or the same CSI-RS configuration may be provided to a plurality of UEs. The CSI-RS may support up to 32 antenna ports. CSI-RSs corresponding to N (N being 1 or more) antenna ports may be mapped to N RE locations within a time-frequency unit corresponding to one slot and one RB. When N is 2 or more, N-port CSI-RSs may be multiplexed in CDM, FDM and/or TDM methods. The CSI-RS may be mapped to the remaining REs except for REs to which CORESET, DMRS, and SSB are mapped. In the frequency domain, the CSI-RS may be configured for the entire bandwidth, a partial bandwidth part (BWP), or a partial bandwidth. The CSI-RS may be transmitted in each RB within the bandwidth in which the CSI-RS is configured (i.e., density = 1), or the CSI-RS may be transmitted in every second RB (e.g., even or odd RB) (i.e., density = 1/2). When the CSI-RS is used as a tracking reference signal (TRS), a single-port CSI-RS may be mapped on three subcarriers in each resource block (i.e., density = 3). One or more CSI-RS resource sets may be configured for the UE in the time domain. Each CSI-RS resource set may include one or more CSI-RS configurations. Each CSI-RS resource set may be configured periodic, semipersistent, or aperiodic.

- The CSI report configuration may include configuration for a feedback type, a measurement resource, a report type, and the like. The NZP-CSI-RS resource set may be used for CSI reporting configuration of a corresponding UE. An NZP-CSI-RS resource set may be associated with the CSI-RS or the SSB. A plurality of periodic NZP-CSI-RS resource sets may be configured as TRS resource sets. (i) The feedback types include a channel quality indicator (CQI), a precoding matrix indicator (PMI), a CSI-RS resource indicator (CRI), an SSB resource block indicator (SSBRI), a layer indicator (LI), a rank indicator (RI), a first layer (L1)-reference signal received strength (RSRP), and the like. (ii) The measurement resource may include configuration for a downlink signal and/or downlink resource on which measurement is performed by the UE to determine feedback information. The measurement resource may be configured as a ZP and/or NZP CSI-RS resource set associated with the CSI report configuration. The NZP CSI-RS resource set may include a CSI-RS set or an SSB set. For example, the L1-RSRP may be measured for a CSI-RS set or for an SSB set. (iii) The report type may include configuration for a time when the UE performs a report and an uplink channel. The reporting time may be configured to be periodic, semipersistent or aperiodic. The periodic CSI report may be transmitted on a PUCCH. The semipersistent CSI report may be transmitted on a PUCCH or a PUSCH based on a MAC CE indicating activation/deactivation. The aperiodic CSI report may be indicated by DCI signaling. For example, a CSI request field of an uplink grant may indicate one of various report trigger sizes. The aperiodic CSI report may be transmitted on a PUSCH.

The UE measures CSI based on configuration information related to CSI. The CSI measurement may include receiving the CSI-RS (720) and acquiring the CSI by computing the received CSI-RS (730).

The UE may transmit a CSI report to the BS (740). For the CSI report, the time and frequency resource available to the UE are controlled by the BS. Channel state information (CSI) includes at least one of a channel quality indicator (CQI), a precoding matrix indicator (PMI), a CSI-RS resource indicator (CRI), a SS/PBCH block resource indicator (SSBRI), a layer indicator (LI), a rank indicator (RI), an L1-RSRP, and/or an L-SINR.

A time domain behavior of CSI reporting supports periodic, semi-persistent, aperiodic. i) Periodic CSI reporting is performed in a short PUCCH, a long PUCCH. Periodicity and a slot offset of periodic CSI reporting may be configured by RRC and refers to a CSI-ReportConfig IE. ii) SP(semi-periodic) CSI reporting is performed in a short PUCCH, a long PUCCH, or a PUSCH. For SP CSI in a short/long PUCCH, periodicity and a slot offset are configured by RRC and a CSI report is activated/deactivated by separate MAC CE/DCI. For SP CSI in a PUSCH, periodicity of SP CSI reporting is configured by RRC, but a slot offset is not configured by RRC and SP CSI reporting is activated/deactivated by DCI(format 0_1). For SP CSI reporting in a PUSCH, a separated RNTI(SP-CSI C-RNTI) is used. An initial CSI report timing follows a PUSCH time domain allocation value indicated by DCI and a subsequent CSI report timing follows a periodicity configured by RRC. DCI format 0_1 may include a CSI request field and activate/deactivate a specific configured SP-CSI trigger state. SP CSI reporting has activation/deactivation equal or similar to a mechanism having data transmission in a SPS PUSCH. iii) Aperiodic CSI reporting is performed in a PUSCH and is triggered by DCI. In this case, information related to trigger of aperiodic CSI reporting may be delivered/indicated/configured through MAC-CE. For AP CSI having an AP CSI-RS, AP CSI-RS timing is configured by RRC and timing for AP CSI reporting is dynamically controlled by DCI.

<u>Quasi-co location (QCL)</u>

When the channel property of an antenna port is to be inferred from a channel of another antenna port, the two antenna ports are quasi co-located. The channel property may include one or more of delay spread, Doppler spread, frequency/Doppler shift, average received power, received Timing/average delay, and a spatial RX parameter.

In relation to the PDCCH/PDSCH QCL, a plurality of transmission configuration indication (TCI) states may be configured in the UE through higher layer signaling. Up to 64 TCI states may be RRC configured for the PDCCH QCL, and up to 128 TCI states may be RRC configured for the PDSCH QCL. In the case of PDSCH QCL, a list for configuring a plurality of TCI-states may be provided through a higher layer parameter PDSCH-Config.

Each TCI-state is related with one or two DL reference signals and a QCL configuration parameter between DM-RS ports of the PDSCH/PDSCH. The QCL configuration parameter may include qcl-Type1 for a first DL RS and qcl-Type2 for a second DL RS. A QCL type may correspond to one of the following:

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

TCI states configured through RRC signaling are deactivated by default.

In the case of PDSCH QCL, up to 8 TCI states from among RRC configured TCI states may be activated through a MAC CE. A TCI field included in DCI that schedules the PDSCH may indicate one of the activated TCI states (e.g., when provision of a TCI field to the corresponding DCI is activated by RRC signaling), and the UE may receive the PDSCH based on QCL information corresponding to the indicated TCI state.

In the case of PDCCH QCL, up to TCI state from among RRC configured TCI states may be activated for the corresponding CORESET through the MAC CE. To receive the PDCCH in the corresponding CORESET, the UE may receive the PDCCH based on QCL information corresponding to the activated TCI state.

Multiple-transmission/reception point (M-TRP)-related operation

The M-TRP transmission method, in which M TRPs transmit data to one UE, is largely divided into two types: eMBB M-TRP transmission, which is a method to increase a transmission rate, and URLLC M-TRP transmission, which is a method to increase a reception success rate and reduce latency.

The DL M-TRP URLLC transmission method refers to a method in which multiple TPRs transmit the same data/DCI by using different space (e.g., layer/port)/time/frequency resource. For example, TRP 1 may transmit specific data/DCI on resource 1, and TRP 2 may transmit the specific data/DCI (i.e., the same data/DCI) on resource 2.

That is, when the DL M-TRP URLLC transmission method is configured, the UE may receive the same data/DCI by using different spaces/times/frequency resources. In this case, the UE may receive an instruction about a QCL RS/type (i.e., DL TCI state) used in the space/time/frequency resource for receiving the data/DCI, from a BS.

For example, when the corresponding data/DCI is received from resource 1 and resource 2, the UE may receive the instruction about the DL TCI state used in resource 1 and the DL TCI state used in resource 2, from the BS. High reliability may be obtained by receiving the corresponding data/DCI through resource 1 and resource 2. This M-TRP URLLC transmission method may be applied to PDSCH/PDCCH.

The UL M-TRP URLLC transmission method refers to a method in which multiple TRPs receive the same data/UCI from one UE by using different spaces/times/frequency resources. For example, TRP 1 may receive the same data/UCI from the UE on resource 1, and TRP 2 may receive the same data/UCI from the UE on resource 2. The TRP 1 and the TRP 2 may share data/UCI received from the UE through a backhaul link (connected between TRPs).

That is, when the UL M-TRP URLLC transmission method is configured, the UE may transmit the same data/DCI by using different spaces/times/frequency resources. In this case, the UE may receive an instruction about Tx beams and Tx power (i.e., UL TCI state) used in the space/time/frequency resource for transmitting the same data/DCI, from the BS. For example, when the same data/DCI is transmitted from resource 1 and resource 2, the UE may receive the instruction about the UL TCI state used in resource 1 and the UL TCI state used in resource 2, from the BS. This UL M-TRP URLLC may be applied to PUSCH/PUCCH.

In terms of DCI transmission, the M-TRP transmission method may be divided into i) a multiple DCI (M-DCI)-based M-TRP transmission method in which each TRP transmits different DCIs, and ii) a single-DCI (S-DCI)-based M-TRP transmission method in which one TRP transmits DCI. For example, in the case of S-DCI, all scheduling information about data transmitted by the M-TRP needs to be transmitted through one DCI, and thus may be used in an ideal backhaul (BH) environment in which dynamic cooperation between two TRPs is possible.

In relation to M-TRP transmission and reception in Rel-16 NR standardization, PDSCH transmission and reception according to the S-DCI-based M-TRP transmission method and the M-DCI-based M-TRP transmission method are supported.

First, the S-DCI-based M-TRP PDSCH transmission method will be described.

For S-DCI-based M-TRP PDSCH transmission, one of SDM/FDM/TDM methods may be used. In the case of SDM, the BS transmits one TB by using multi-layers, but transmits layers belonging to different DMRS CDM groups through different transmission beams (Tx beams) (i.e. QCL RS or TCI state). As such, transmission capacity may be improved by increasing the number of layers compared to the existing S-TRP transmission method. When one TB is transmitted using multiple layers, some layers may be transmitted to the TRP 1 and the other layers may be transmitted to the TRP 2, thereby improving channel reliability due to diversity gain.

For FDM, two schemes, schemes 2a and 2b, are supported. Here, the scheme 2a is a method of transmitting one TB to a multi-RB but transmitting RBs belonging to different RB groups by using different Tx beams (i.e., QCL RS or TCI state). The scheme 2b is a method of transmitting the same TB to different RB groups but transmitting RBs belonging to different RB groups by using different Tx beams (i.e., QCL RS or TCI state). For TDM, two schemes, schemes 3 and 4, are supported. Here, the scheme 4 (i.e., inter-slot TDM) is a method of transmiting the same TB repeatedly in multiple slots but transmitting slots belonging to different slot groups with different Tx beams (i.e., QCL RS or TCI state). In contrast, the scheme 3 (i.e., intra-slot TDM) is a method of repeatedly transmitting the same TB in several OFDM symbol groups but transmitting some OFDM symbol groups and the other OFDM symbol groups with different Tx beams (i.e., QCL RS or TCI state).

Hereinafter, the M-DCI-based M-TRP PDSCH transmission method will be described.

The M-DCI based MTRP PDSCH transmission is a method of scheduling and transmitting the PDSCH through DCI by each TRP. That is, the TRP 1 transmits PDSCH 1 through DCI 1, and TRP 2 transmits PDSCH 2 through DCI 2. When the PDSCH 1 and the PDSCH 2 overlap each other on the same frequency time resource, two PDSCHs are received for the same RE, thereby increasing resource efficiency and increasing transmission capacity. To this end, the concept of CORESET pool, which refers to a group of several CORESETs, is introduced. For example, the TRP 1 transmits a PDCCH through CORESET belonging to CORESET pool 0 and also transmits a PDSCH scheduled by the corresponding PDCCH. The TRP 2 transmits a PDCCH through CORESET belonging to CORESET pool 1 and also transmits a PDSCH scheduled by the corresponding PDCCH.

Even in the case of PUSCH, a specific TRP may schedule PUSCH transmission to the UE through CORESET belonging to each COERSET pool. For example, some PUCCH resources may be scheduled by the TRP 1, and the other PUCCH resources may be scheduled by the TRP 2. The UE may transmit independent PUSCH/PUCCH for each of the TRP 1 and the TRP 2.

The UE may recognize a PUSCH (or PUCCH) scheduled by the DCI received based on different CORESETs (or CORESETs belonging to different CORESET groups) as a PUSCH (or PUCCH) transmitted to different TRPs or as PUSCHs (or PUCCHs) of different TRPs. A method for UL transmission (e.g., PUSCH/PUCCH) transmitted to different TRPs may be equally applied to UL transmission to different panels belonging to the same TRP.

Hereinafter, a CORESET group ID (or COERSET pool index with the same meaning) may mean index/identification information (e.g., ID) to distinguish CORESETs for each TRP/panel. A CORESET group may mean a group/union of CORESETs distinguished by index/identification information (e.g., ID)/CORESET group ID, and the like to distinguish CORESETs for each TRP/panel. For example, the CORESET group ID may be specific index information defined within CORESET configuration. In other words, the CORESET group may be configured/indicated/defined by an index defined within the CORESET configuration for each CORESET. And/or, the CORESET group ID may mean an index/identification information/indicator, or the like for distinction/identification between CORESETs configured/related to each TRP/panel.

Hereinafter, the CORESET group ID may be replaced and expressed as a specific index/specific identification information/specific indicator for distinction/identification between CORESETs configured/related to each TRP/panel. The corresponding information may be configured/indicated through higher layer signaling (e.g., RRC signaling or MAC-CE) and/or physical layer signaling (e.g., DCI). For example, PDCCH detection for each TRP/panel may be configured/instructed to be performed on a CORESET group basis, and UCI (e.g. CSI, HARQ-ACK/NACK, or SR) for each TRP/panel and/or a UL physical channel resource (e.g., PUCCH/PRACH/SRS resources) may be configured/instructed to be managed/controlled separately on a CORESET group basis. And/or, HARQ ACK/NACK (process/retransmission) for PDSCH/PUSCH, or the like scheduled for each TRP/panel on a CORESET group basis may be managed.

For example, a higher layer parameter ControlResourceSet IE (information element) may include CORESET-related ID (e.g., controlResourceSetID)/CORESET pool index for CORESET (e.g., CORESETPoolIndex)/time/frequency resource configuration of CORESET/TCI information related to CORESET. For example, the index of the CORESET pool (e.g., CORESETPoolIndex) may be configured to 0 or 1. In the description described above in the disclosure, the CORESET group may correspond to the CORESET pool, and the CORESET group ID may correspond to the CORESET pool index (e.g., CORESETPoolIndex).

With regard to M-TRP transmission and reception in Rel-17 NR standardization, M-TRP PDCCH/PDSCH SFN transmission, S-DCI-based M-TRP PUSCH repeated transmission, and single PUCCH resource-based M-TRP PUCCH repeated transmission are supported. In the corresponding transmission schemes, the same content (i.e., DCI/UL TB/UCI) is transmitted repeatedly by improving the URLLC target to increase reliability. Here, the M-TRP PDCCH repeated transmission is performed based on TDM or FDM, the M-TRP PDCCH/PDSCH SFN transmission is performed in the same time/frequency/layer, the S-DCI-based M-TRP PUSCH repeated transmission is performed based on TDM, and the single PUCCH resource-based M-TRP PUCCH repeated transmission is performed based on TDM.

First, the S-DCI-based M-TRP PDCCH repeated transmission method will be described.

In NR Rel-17 standardization, a plurality of CORESETs with different TCI states (i.e., different QCL RSs) are configured for the UE for M-TRP PDCCH repeated transmission, and a plurality of search space (SS) set that are each connected to the corresponding CORESETs are configured. The BS may instruct/configure to the UE that the SS set connected to one CORESET and the SS set connected to another CORESET are linked with each other for repeated transmission. As such, the UE may know that PDCCH candidates of the corresponding SS set are transmitted repeatedly.

For example, two CORESETs, CORESET 0 and CORESET 1, may be configured to the UE, CORESET 0 and CORESET 1 may be connected to SS set 0 and SS set 1, respectively, and SS set 0 and SS set 1 may be linked with each other. The UE may know that the same DCI is transmitted repeatedly in the PDCCH candidate of SS set 0 and the PDCCH candidate of SS set 1 and know that, based on a specific rule, a specific PDCCH candidate of SS set 0 and a specific PDCCH candidate of SS set 1 are a pair configured to repeatedly transmit the same DCI. The corresponding two PDCCH candidates are referred to as linked PDCCH candidates, and the UE may successfully decode the corresponding DCI when properly receiving either of the two PDCCH candidates. However, the UE may use the QCL RS (i.e., DL beam) of the TCI state of COERSET 0 connected to SS set 0 when receiving the PDCCH candidate of SS set 0 and use the QCL RS (i.e., DL beam) of the TCI state of COERSET 1 connected to SS set 1 when receiving the PDCCH candidate of SS set 1. Accordingly, the UE receives the associated PDCCH candidates by using different beams.

Hereinafter, the M-TRP SFN PDCCH/PDSCH transmission method will be described.

As one of M-TRP PDCCH repeated transmission types, multiple TRPs may repeatedly transmit the same DCI through the same time/frequency/DMRS port, and this transmission method may be referred to as SFN PDCCH transmission. However, for SFN PDCCH transmission, the BS configures a plurality of TCI states in one CORESET instead of configuring a plurality of CORESETs configured with different TCI states. When receiving a PDCCH candidate through an SS set connected to one corresponding CORESET, the UE may perform channel estimation of the PDCCH DMRS by using all of the corresponding plurality of TCI states and attempt decoding.

When repeatedly transmitting the M-TRP PDSCH described above, the two TRPs repeatedly transmit the corresponding channel on different resources. However, when the resources used by the two TRPs are the same, that is, when the same channel is repeatedly transmitted through the same frequency/time/layer (i.e., DMRS port), the reliability of the corresponding channel may be improved. In this case, the resources of the same channel that are repeatedly transmitted are not differentiated and are received together during transmission (i.e., air), and thus may be recognized as one channel (e.g., composite channel) in terms of a receiving end (e.g., UE). For SFN PDSCH transmission, two DL TCI states for PDSCH DMRS reception may be configured to the UE.

Hereinafter, the S-DCI-based M-TRP PUSCH repeated transmission method will be described.

In NR Rel-17 standardization, the BS configures two SRS sets to the UE for S-DCI-based M-TRP PUSCH transmission, and each set is used to indicate a UL Tx port for the TRP 1 and the TRP 2, a UL beam/QCL information. The BS may perform SRS resource indication for each SRS resource set through two SRI fields included in one DCI and indicate up to two PC parameter sets. For example, a first SRI field may indicate the SRS resource and PC parameter set defined in SRS resource set 0, and a second SRI field may indicate the SRS resource and PC parameter set defined in SRS resource set 1. The UE may receive instructions about a UL Tx port, a PC parameter set, and a UL beam/QCL information for the TRP 1 through the first SRI field, and therethrough, the corresponding UE performs PUSCH transmission in TO corresponding to SRS resource set 0. Similarly, the UE may receive instructions about a UL Tx port, a PC parameter set, and a UL beam/QCL information for the TRP 2 through the second SRI field, and therethrough, the corresponding UE performs PUSCH transmission in TO corresponding to SRS resource set 1. In addition to the SRI field, the existing one field is expanded into two fields to indicate TPMI, PTRS, and TPC fields for each TRP. STRP PUSCH repeated transmission may be performed by introducing a 2-bit SRS resource set indication field and selecting a specific one of two SRS sets, and MTRP PUSCH repeated transmission may be performed by selecting both. That is, when the corresponding field is 00 and 01, STRP PUSCH transmission corresponding to each set is performed by indicating SRS set 0 and SRS set 1, respectively, and when the corresponding field is 10, MTRP PUSCH transmission is performed in the order, in which a set pair is indicated, by indicating (SRS set 0, SRS set 1). That is, set 0 corresponds to first PUSCH TO. When the field is 11, MTRP PUSCH transmission is performed in the order, in which the set pair is indicated, by indicating (SRS set 1, SRS set 0). That is, set 1 corresponds to first PUSCH TO.

Hereinafter, a single PUCCH resource-based M-TRP PUCCH repeated transmission method will be described.

In NR Rel-17 standardization, for single PUCCH resource-based M-TRP PUCCH transmission, the BS may activate/configure, to the UE, two spatial relation info to a single PUCCH resource (in the case of FR1, two PC parameter sets are activated/configured). When UL UCI is transmitted through a corresponding PUCCH resource, each spatial relation info is used to indicate, to the UE, spatial relation info towards each of the TRP 1 and the TRP 2. For example, through a value indicated in the first spatial relation info, the UE is instructed to Tx beam/PC parameter(s) toward the TRP 1, and the UE performs PUCCH transmission in the TO corresponding to the TRP 1 by using the corresponding information. Similarly, through the value indicated in the second spatial relation info, the UE is instructed to Tx beam/PC parameter(s) toward the TRP 2, and the UE performs PUCCH transmission in the TO corresponding to the TRP 2 by using the corresponding information.

For M-TRP PUCCH repeated transmission, a configuration method is improved to configure two spatial relation inf in the PUCCH resource. That is, when a power control (PC) parameter such as PLRS, Alpha, P0, and closed loop index is configured in each spatial relation info, the spatial relation RS may be configured. As a result, PC information and spatial relation RS information corresponding to two TRPs may be configured through two spatial relation info. Therethrough, the UE transmits UCI (i.e., CSI, ACK/NACK, or SR) PUCCH by using the first spatial relation info in the first TO, and transmits the same UCI PUCCH by using the second spatial relation info in the second TO. In the disclosure, a PUCCH resource configured with two spatial relation info is referred to as an M-TRP PUCCH resource, and a PUCCH resource configured with one spatial relation info is referred to as an S-TRP PUCCH resource.

<u>Transmission configuration indication (TCI) state/beam indication</u>

In description of the inventive concept, when receiving/transmitting data/DCI/UCI through a specific space/-

time/frequency resource, using (or mapping) a specific TCI state (or TCI) means that, in the case of DL, a channel is estimated from DMRS by using a QCL type and QCL RS indicated by a specific TCI state in a specific space/time/-frequency resource, and data/DCI/UCI is received/demodulated through the estimated channel.

When data/DCI/UCI is received/transmitted through a specific space/time/frequency resource, using (or mapping) a specific TCI state (or TCI) means that, in the case of UL, DMRS and data/UCI is transmitted/modulated using Tx beams and/or Tx power indicated by a specific TCI state in a specific space/time/frequency resource.

The UL TCI state may include Tx beam or Tx power information of the UE. The BS may configure spatial relation info or the like to the UE through other parameters instead of the TCI state.

For example, the UL TCI state may be directly indicated to the UE through UL grant DCI. Alternatively, the UL TCI state may mean the spatial relationship info of an SRS resource indicated through an SRS resource indicator (SRI) field of the UL grant DCI. Alternatively, the UL TCI state may mean an open loop (OP) Tx power control parameter connected to a value indicated through the SRI field of the UL grant DCI.

Here, the OL Tx power control parameter may include, for example, j (index and alpha for OP parameter(s) Po (set of up to 32 parameter values per cell), or q_d (index of DL RS resource for path loss (PL) measurement) (up to 4 measurements per cell), or/and I (closed loop power control process index (up to 2 processes per cell)).

For convenience of description of the inventive concept, it is assumed that 2 TRPs cooperate with each other to perform transmission/reception operations, but the inventive concept is not limited thereto. In other words, the inventive concept may be expanded and applied in an environment with multiple TRPs of 3 or more, and may also be expanded and applied in an environment in which the same TRP performs transmission/reception through different panels or beams. The UE may recognize different TRPs as different TCI states. When the UE transmits and receives data/DCI/UCI by using TCI state 1, it means that data/DCI/UCI is transmitted and received from the TRP 1 (or to TRP 1).

Transmission occasion (TO) refers to each channel transmitted at different times when multiple channels are TDMed, refers to each channel transmitted in different frequencies/RBs when multiple channels are FDMed, and refers to each channel transmitted at different layers/beams/DMRS ports when multiple channels are SDMed. One TCI state may be mapped to each TO. When the same channel is transmitted repeatedly, complete data/DCI/UCI is transmitted to one TO, and a receiving end may receive multiple TOs to increase a reception success rate.

Single DCI based multi-TB PUSCH/PDSCH scheduling

In Rel.17 NR, a method in which one DCI simultaneously schedules multiple PUSCH/PDSCH in an ultra-high frequency band (beyond 5.26 GHz) is supported. For example, multiple TDRAs (=TO) may be indicated at once through a TDRA field of the PUSCH scheduling DCI, and different TBs for each TO are transmitted through the PUSCH. The FDRA, MCS, TPMI, and SRI values of the corresponding DCI are commonly applied to multiple scheduled TBs. NDI and RV for each TB are individually indicated through the corresponding DCI, and HARQ number indicates one value but increases sequentially in TO order based on the initial TO.

Simultaneous transmission across multiple panels (STxMP)

Recently, for Rel. 18 NR standardization, a method for the UE to simultaneously transmit multiple channels/RSs of the same type or multiple channels/RSs of different types simultaneously has been discussed. In the case of existing UEs, an operation of transmitting multiple channels/RS at a time is limited (e.g., it is possible to simultaneously transmit multiple SRS resources of different SRS sets for UL beam measurement, but it is impossible to transmit multiple PUSCHs simultaneously), but in the case of advanced UEs in the future, this limit may be alleviated and multiple channels or RSs may be transmitted simultaneously using multiple transmission panels, and in this case, such UEs are called STxMP UEs. For example, two PUSCHs corresponding to two UL TBs are scheduled on the same RE, and for transmission of PUSCHs 1 and 2, spatial relation RS 1 and PC parameter Set 1 (i.e., UL TCI state 1), and Spatial relation RS 2 and PC parameter Set 2 (i.e., UL TCI state 2) are configured, respectively. The UE transmits PUSCH 1 by using panel 1 corresponding to UL TCI state 1 and simultaneously transmits PUSCH 2 by using panel 2 corresponding to UL TCI state 2.

When the BS performs PUSCH scheduling through DCI, the BS may indicate whether to transmit the PUSCH through STxMP, through a single panel, or through MTRP PUSCH repetition. The corresponding UE needs to have STxMP capability and an STxMP mode needs to be enabled previously through RRC signaling or the like. To this end, the existing SRS resource set indication field may be redefined and used, or a new DCI field may be introduced.

Unified TCI framework

FIG. 8 is a diagram for explaining a concept of the introduced unified TCI framework. In Rel. in 17 unified TCI framework, not only the DL TCI state but also the UL TCI state may be indicated through DL DCI (e.g., DCI format 1-1 or 1-2), or only the UL TCI state may be indicated without DL TCI state indication through DL DCI. As such, in Rel. 17, a dynamic beam update operation through joint DL/UL TCI state indication or separate DL/UL TCI state indication may be supported.

The dynamic beam update operation may include a common beam update, and for example, the BS may instruct the UE to commonly use one beam for a plurality of specific channel/RS combinations through DCI and/or MAC-CE, and thus the UE may perform the common beam update operation.

Thus, the methods used for UL beam and power control (PC) configuration in the existing Rel. 15/16 may be replaced by the UL TCI state indication method in Rel. 17. In Rel. 17, one UL TCI state may be indicated through the TCI field of the DL DCI, and the corresponding UL TCI state may be applied to all PUSCHs and all PUCCHs after a certain time called beam application time and applied to some or all of the indicated SRS resource sets. In detail, in the case of UL, common beam update may be applied to dynamic grant (DG)/configured grant (CG)-PUSCH, and aperiodic CSI-RS for tracking/BM, and SRS may be configured as target channel/RS for common beam update.

In the case of DL, common beam update may be applied to UE-dedicated CORESET and UE-dedicated reception on PDSCH.

For the common beam applicability, the Rel-17 beam indication operation is mainly related to the single-TRP operation.

In the unified TCI framework, when the number of DL TCI states is represented by M and the number of UL TCI states is represented by N, the numbers of DL/UL TCI states for common beam update of NR Rel. 17 are M=1/N=1, respectively.

In NR Rel-18, in relation to MIMO standardization, discussions have been underway on the multi-TRP operation through expansion of the unified TCI framework configuration (M > 1 and/or N > 1) and the corresponding configuration. Table 6 summarizes the contents of the Rel-18 unified TCI framework extension discussed to date.

[Table 6]

| |
|---|
| **1. TCI indication**<br>1) Existing TCI field in DCI format 1_1/1_2 (w, w/o DLA) can indicate multiple joint/DL/UL TCI states<br>2) # of codepoints: up to 8<br>3) Combination: J/J, S/S, J/S(X) up to 4 TCI states (in case of S/S) can be indicated in one codepoint<br>4) For M-DCI based MTRP<br>- One joint TCI state can be mapped to a TCI codepoint<br>- DL/UL or a pair of DL/UL TCI states can be mapped to a TCI codepoint<br>5) For S-DCI based MTRP: The existing TCI field in DCI can indicate joint/DL/UL TCI state(s) for one or both of the 2 TRPs in one beam indication instance |
| **2. Applicability**<br>1) M-DCI based MTRP<br>- TCI field in a DCI associated with one CORESET pool index can indicate joint/DL/UL TCI state(s) specific to the same CORESET pool index value<br>PDCCH: Apply the indicated TCI state specific to a CORESET pool index to PDCCH on a CORESET that is associated with the same CORESET pool index<br>PDSCH/PUSCH: Apply the indicated TCI state specific to a CORESET pool index to PDSCH/PUSCH scheduled/activated by PDCCH on a CORESET that is associated with the same CORESET pool index<br>For other channels/RSs: FFS<br>- The same configuration/rule (i.e. CORESET determination) used in Rel-17 is reused<br>2) S-DCI based MTRP<br>- Use RRC configuration<br>PDCCH: UE shall apply the TCI state(s) indicated by DCI/MAC-CE to a CORESET or a CORESET group (if CORESET group configuration is supported)<br>PUCCH resource/group<br>FFS: Alignment on SRS resource set for CB/NCB<br>- Dynamic application<br>PDSCH: A new DCI field in DCI format 1_1/1_2 that schedules/activates PDSCH reception is used to determine which one or both of the indicated joint/DL TCI states shall be applied<br>The presence of the DCI field is configurable by RRC<br>PUSCH: Use an indicator field (could be reusing an existing DCI field or introducing a new DCI field) in DCI format 0_1/0_2<br>- PDSCH-CJT |

(continued)

| |
|---|
| **2. Applicability**<br>It is supported as a S-DCI based MTRP scheme<br>Up to 2 joint TCI states can be indicated by MAC-CE/DCI and applied to PDSCH-CJT<br>Support of 1 or 2 indicated joint TCI states is up to UE capability<br>FFS: How to apply 2 indicated joint/DL TCI states |

In particular, with regard to a dynamic TCI state application operation related to S-DCI based Multi-TRP(MTRP) PDSCH reception, Table 7 shows the matters agreed upon at the recent standardization meeting (RAN1#111).

[Table 7]

| |
|---|
| **1. Agreement**<br>On unified TCI framework extension for S-DCI based MTRP, a new indicator field is supported as the DCI field in DCI format 1_1/1_2 that schedules/activates PDSCH<br>reception to determine which one or both of the indicated joint/DL TCI states shall be applied to the scheduled/activated PDSCH reception<br>- FFS: Detail design of the new indicator field |
| **2. Agreement**<br>On unified TCI framework extension for S-DCI based MTRP, a DCI field in DCI format 1_1/1_2 that schedules/activates PDSCH reception is used to determine which one or both of the indicated joint/DL TCI states shall be applied to the scheduled/activated PDSCH reception<br>- The presence of the DCI field is configurable by RRC; when the DCI field is not present in DCI format 1_1/1_2, the UE shall apply the default indicated joint/DL TCI state(s) to PDSCH reception<br>FFS: Details on the default indicated joint/DL TCI state(s) to PDSCH reception<br>- FFS: The DCI field is a new indicator field or an existing field (e.g., the existing TCI field)<br>- FFS: Regardless the DCI field is present or not present, how to apply the indicated<br>joint/DL TCI state(s) to PDSCH reception if the offset between the reception of the DCI format 1_1/1_2 and the corresponding PDSCH reception is less than a threshold FFS: How to apply the indicated joint/DL TCI state(s) to PDSCH reception scheduled/activated by DCI format 1_0.<br>Above applies for the case where PDSCHs scheduled by the same DCI. |

In the second Agreement in Table 7, parameter 'timeDurationforQCL' defined in the existing standard may be used as a threshold for the offset between the DCI format 1_1/1_2 and the corresponding PDSCH reception.

As described above, when a beam to receive an S-DCI based MTRP PDSCH is applied, a specific field (hereinafter referred to as a new indication field) within the PDSCH scheduling DCI may be added to indicate one or more of the indicated TCI state(s) and indicate the presence or absence of the corresponding new indication field through RRC configuration.

First, a relationship between the indicated TCI state(s) through the existing beam indication DCI and the TCI state indication within the DCI scheduling the PDSCH is now described with reference to Table 6, and for the beam indication related to S-DCI based MTRP operation, single/multiple TCI state(s) may be indicated through DCI format 1_1/1_2 with or without DL assignment in one beam indication instance. The TCI state(s) in the latest DCI scheduling the PDSCH updates the existing indicated TCI state after a certain time (i.e. beam application time (BAT) after ACK for the corresponding DCI. For example, when the existing indicated TCI states = {TCI#1, TCI#2} and the TCI field in the latest DCI indicates {TCI#3, TCI#4}, the indicated TCI states after BAT are updated as {TCI#1→ TCI#3, TCI#2→TCI#4}. According to the current operation, the number of existing indicated TCI states is also changed by the new TCI state indication. In other words, even if the number of the existing indicated TCI states is plural, when the number of TCI states indicated in the new TCI indication is 1, the number of indicated TCI states after BAT may be 1. As such, when the number of the existing indicated TCI states and the number of TCI states indicated by the TCI field in the latest DCI are different from each other, even if PDSCH reception is intended to be used by applying a plurality of indicated TCI states in the new indication field, the number of indicated TCI states before and after BAT may vary, and thus a problem arises in terms of beam applicability. Even if the number of the existing indicated TCI states and the number of TCI states indicated by the TCI field in the latest DCI are equal to 1, there is a limitation in that STRP PDSCH only operates through a single indicated TCI state. When the new indication field is not present due to RRC configuration, even if a default operation is configured in a pre-defined manner by using a specific one indicated TCI state or both, only one operation of STRP or MTRP PDSCH reception is performed, and thus a problem arises in that flexibility for PDSCH scheduling and beam indication is degraded.

Therefore, in this specification, in consideration of extension of the S-DCI based MTRP operation, a method of configuring the beam applicability of the indicated TCI state(s) to be applied to STRP/MTRP PDSCH reception according to the introduced new indication field and the number of TCI states in the DCI scheduling the PDSCH I may be proposed.

## Proposal 1

In S-DCI-based single/multiple TCI state(s) indication according to multiple M and/or N configurations, an operation may be performed by configuring whether to permit maintained beam (i.e., MB) for non-indicated TCI state(s) as an indicator to determine reception beam(s) for PDSCH reception.

- When MB is allowed, even if a single TCI state is indicated in one beam indication instance, the number of indicated TCI states may always be interpreted as multiple.

Proposal 1 is an instruction of a maintained beam operation for indicated TCI states to dynamically indicate beam applicability for STRP/MTRP PDSCH reception even if the number of the existing indicated TCI states described above and the number of TCI states indicated in the TCI state field in the latest DCI are the same/different. In other words, in the case of TCI that is not indicated for TCI indication/update of the existing indicated TCI state(s) through the latest DCI format 1_1/1_2 (with or without DL assignment), the corresponding TCI state may be interpreted to be used as the maintained/valid/applied beam rather than being excluded from the subsequent beam applicability. When the MB operation is permitted, for example, when a time point of the latest DCI is t(0), two TCI states {TCI#1, TCI#2} are indicated at time t(-2) and then the TCI state {TCI#3} is updated to the 1st indicated TCI state at a later time t(-1), the indicated TCI states are changed to {TCI#1→TCI#3, TCI#2}, and TCI#2 is a state that is not indicated and is maintained, that is, the corresponding TCI state is MB. In the case of this operation, even if the number of TCI states in the subsequent beam indication after multiple TCI states are indicated is 1, the remaining TCI state(s) that are not indicated may be maintained and applied to beam applicability, and thus the number of the indicated TCI states may always be interpreted as plural (e.g., 2 joint TCI states for 2 TRPs). The corresponding indicator may be indicated by the BS to the UE through the RRC/MAC-CE configuration.

When the MB operation is not permitted, if the number of indicated TCI states is 1 as shown in Case 2/4 in Table 8 below, usage may be limited to STRP PDSCH purposes only, and even if the number of TCI states in the latest DCI is multiple, the TCI state may be applied through a new indication field indication only for PDSCH reception after BAT to apply the TCI state to MTRP PDSCH reception. Conversely, even if the number of indicated TCI states is multiple, when the number of TCI states in the latest DCI is 1, there is a restriction that multiple TCI states may be applied according to an instruction in the new indication field only for the PDSCH before BAT.

## Proposal 2

For STRP/MTRP PDSCH reception according to S-DCI based MTRP extension, a configuration method for beam update/applicability according to the presence/non-presence of a new indication field and the number of TCIs in the PDSCH scheduling DCI may be proposed.

- Depending on the presence or absence of the new indication field:

    1) Opt 1-1: When there is a new indication field, one of multiple indicated TCI states or multiple TCI states may be indicated through the new indication field, and may be used as a PDSCH reception beam for STRP/MTRP purposes.
    2) Opt 1-2: When there is no new indication field, one of multiple indicated TCI states or multiple pre-defined TCI states (depending on whether the number of TCI states in the DCI scheduling PDSCH is singular/plural) may be used as a PDSCH reception beam for the STRP/MTRP purpose. For example, if there is no new indication field, all of the multiple indicated TCI states may be used for PDSCH reception.

- For beam application before and after the BAT of the above operation:

    1) Opt 2-1: A PDSCH before BAT of the latest DCI for PDSCH scheduling may be received based on indicated TCI states (MB permitted).
    2) Opt 2-2: A PDSCH after BAT of the latest DCI for PDSCH scheduling may be received based on updated TCI states (MB permitted) with the TCI state(s) indicated in the TCI state field in the latest DCI.

Proposal 2 proposes a beam update/applicability operation according to the new indication field indication based on the existing indicated TCI state(s) and the number of TCI states in the DCI that schedules the PDSCH when the MB operation in Proposal 1 above is considered to be permitted, and a combination of beam update/applicability for the corresponding operation is shown in Table 8 below. {IT#1, MB}, which is an example of indicated TCI states in Case 2/4, may maintain non-indicated TCI states as maintained beams as described in Proposal 1 above, and thus even if the number of indicated TCI states is 1, indicated TCI states may be interpreted as plural.

Table 8 shows an example of a beam update/applicability combination method according to the number of TCIs in DCI that schedules a new indication field and a PDSCH. It is assumed that the maintained beam (MB) operation described above is permitted. In Table 8, 'IT' means an indicated TCI state, 'MB' means maintained beam, and 'LT' means TCI in the latest DCI.

[Table 8]

| | # of indicated TCI states | # of TCIs in the latest DCI | New indication field | Behavior | | |
|---|---|---|---|---|---|---|
| | | | | Beam update (after BAT) | Beam application | |
| Case1 | 2 | 2 | 00 | | IT#1 | STRP |
| | {IT#1, IT#2} | ***{LT#1, LT#2}*** | 01 | {IT#1,IT#2}→{LT#1,LT #2} | IT#2 | STRP |
| | | | 10 | | {IT#1, IT#2} | MTRP |
| | | | 11 | | {IT#2, IT#1} | MTRP |
| | | | X | | {IT#1, IT#2} | ***MTRP*** |
| Case2 | 1 {IT#1, MB} | 2 ***{LT#1, LT#2}*** | 00 | {IT#1,MB}→{LT#1,LT# 2} | IT#1 | STRP |
| | | | 01 | | MB | STRP |
| | | | 10 | | {IT#1, MB} | MTRP |
| | | | 11 | | {MB, IT#1} | MTRP |
| | | | X | | {IT#1, MB} | ***MTRP*** |
| Case3 | 2 {IT#1, IT#2} | 1 ***{LT#1}*** | 00 | {IT#1,IT#2}→{LT#1,IT# 2} | IT#1 | STRP |
| | | | 01 | {IT#1,IT#2}→{IT#1,LT# 1} | IT#2 | STRP |
| | | | 10 | {IT#1,IT#2}→{LT#1,IT# 2} | {IT#1, IT#2} | MTRP |
| | | | 11 | {IT#1,IT#2}→{IT#1,LT# 1} | {IT#2, IT#1} | MTRP |
| | | | X | {IT#1,IT#2}→{LT#1,IT# 2} | IT#1 | ***STRP*** |
| Case4 | 1 {IT#1, MB} | 1 ***{LT#1}*** | 00 | {IT#1,MB}→{LT#1,MB } | IT#1 | STRP |
| | | | 01 | {IT#1,MB}→{IT#1,LT# 1} | MB | STRP |
| | | | 10 | {IT#1,MB}→{LT#1,MB | {IT#1, MB} | MTRP |
| | | | 11 | {IT#1,MB}→{IT#1,LT# 1} | {MB, IT#1} | MTRP |
| | | | X | {IT#1,MB}→{LT#1,MB } | IT#1 | ***STRP*** |

As may be seen in each case in Table 8, a specific one or multiple TCI states from among multiple indicated TCI states are indicated through the 2-bit new indication field and applied as a beam for STRP/MTRP PDSCH purposes. For example, in the case of 00 and 01, the first/second TCI state from among the 2 indicated TCI states is indicated and used as a STRP PDSCH reception beam. In the case of 10 and 11, all 2 indicated TCI states are used, but an ordered pair of the corresponding TCI states is used as is or the order is reversed and the TCI states may be applied to the MTRP PDSCH reception beam. Alternatively, the new indication field may be used only for TCI state applicability for scheduled PDSCH purposes and the operation may be performed by indicating whether a codepoint indicated by the TCI field is a first or second TCI through RRC by using a pre-defined manner.

In this case, when there is no new indication field in each case, even if MB is permitted and there are two indicated TCI states, it is not possible to give instructions on which TCI state(s) to apply and utilize as STRP/MTRP, and in the corresponding situation, the operation is possible when a specific TCI state or both TCI states are pre-configured to be used by default, but the operation may be performed with STRP or MTRP PDSCH reception only. As a method of dynamic indication to resolve this problem, whether to use a single or multiple indicated TCI states according to the number of TCI states indicated in the TCI field in the latest DCI for PDSCH scheduling may be indicated. In other words, as may be seen from the underlined part in Table 8, when there is no new indication field for STRP/MTRP PDSCH application, beam applications are classified according to the number of TCI states in the latest DCI, and the specific single or multiple TCI states indicated in this case may be determined in a pre-defined method. When there is a new indication field, the applied beam may be determined according to the instruction of the indication field, regardless of the number of indicated TCI states.

For the applicability operation, it is necessary to consider an application time for the TCI state(s) indicated by the latest DCI and determine the PDSCH reception beam before/after the corresponding time. In other words, the indicated TCI state(s) of the TCIs in the PDSCH scheduling DCI are updated after a certain time (i.e., BAT) after ACK. Table 8 above assumes a situation before the indicated TCI state(s) is updated, but when PDSCH reception is after BAT, the beam application operation may be performed in each case with updated TCI after BAT without changing the order pair. For example, in case 2, the updated TCI states after BAT may be {LT#1, LT#2}, and the operation may be performed by applying one or more of the updated TCI states according to each new indication field. In case 3, the number of TCIs in the latest DCI is 1 and the number of indicated TCI states is 2, and after BAT, the first or second indicated TCI states may be updated to LT#1 according to instructions in the new indication field, and the other indicated TCI states may be applied to MB to perform beam application operations.

For the S-DCI based PDSCH reception, the corresponding PDSCH may be performed before scheduling DCI is decoded. To this end, the UE may first receive a specific buffer beam and then decode the PDSCH information prereceived based on the information indicated in the DCI after DCI decoding. In the current Rel-18 unified TCI framework of MTRP extension, M/N may each be expanded to 2, and DL reception beams may be determined through multiple joint/DL TCI states. In particular, it is unknown until DCI decoding whether the corresponding PDSCH is for STRP/MTRP purposes, and thus this may affect whether or not to decode the PDSCH according to determination of the buffer beam. Therefore, when the PDSCH for STRP/MTRP purposes is scheduled dynamically through DCI, a method of configuring the PDSCH buffer beam(s) for the case in which the PDSCH is before timeDurationForQCL may be proposed.

Proposal 3

For STRP/MTRP PDSCH reception when M=2 is configured according to S-DCI based MTRP extension, when scheduled PDSCH reception is before timeDurationForQCL, a method of configuring PDSCH buffer beam(s) based on two (maintained) applied TCI states through the existing beam indication may be proposed.

(Case 1) Only the applied TCI state of one of the two (e.g., first subset of TCI states, NW configured subset of TCI state(s)) may be configured as a (pre-defined) buffer beam.

- The UE may not expect the scheduled PDSCH before timeDurationForQCL as a PDSCH for MTRP purposes. (e.g. For PDSCH scheduled before timeDurationForQCL, the first or second TCI state from among the maintained (applied) two TCI states is applied)

(Case 2) Both applied TCI states may be configured to buffer beams.

- Option 1: The UE may not expect the scheduled PDSCH before timeDurationForQCL as a PDSCH for STRP purposes. (e.g. For PDSCH scheduled before timeDurationForQCL, maintained (applied) two TCI states are applied)
- Option 2: After decoding of the Scheduling DCI, it may be determined whether the corresponding PDSCH is STRP or MTRP through full-set or sub-set configuration of the TCI state indicated in the TCI state field or new indication field of the DCI.

  1) When the TCI state field is configured as full-set (e.g. 2 joint TCI states or 4 DL/UL separate TCI states are indicated), the corresponding PDSCH may be determined to be an MTRP PDSCH and the PDSCH received through configured 2 buffer beams may be decoded.
  2) When the TCI state field is configured as a sub-set (e.g. 1 joint TCI state or 2 DL/UL separate TCI states is/are indicated for TRP1 or TRP2), the corresponding PDSCH may be determined to be an STRP PDSCH (for TRP1 or TRP2) and the PDSCH for one of the information received through 2 buffer beams may be decoded.

- In this case, when the new indication field is enabled, it may be determined whether the scheduled PDSCH is a STRP/MTRP PDSCH according to a corresponding codepoint indication value.
- Example

Codepoint '00': STRP PDSCH for TRP1
Codepoint '01': STRP PDSCH for TRP2
Codepoint '10': MTRP PDSCH with {TRP1, TRP2}
Codepoint '11': MTRP PDSCH with {TRP2, TRP1}

Buffer beam(s) may mean that default QCL assumption for PDSCH in case the scheduling offset is less than timeDurationForQCL. In this case, even if M=2 is configured for a reception beam to buffer the PDSCH, the operation may be performed by selecting one of the two existing (maintained) applied TCI states (case 1). In this case, after the scheduling DCI is decoded, when the scheduled PDSCH is not for STRP use but is an MTRP PDSCH, the decoding performance of the PDSCH may not be guaranteed, and thus the UE expects the PDSCH to be STRP only.

When both applied TCI states are used as buffer beams (case 2), the UE may expect that the corresponding PDSCH is MTRP only, as in the previous case (option 1). Alternatively, after the scheduling DCI is completely decoded while being received with 2 buffer beams, whether the PDSCH is used for STRP/MTRP may be checked, and thus the PDSCH may be decoded based thereon. As a method of distinguishing STRP/MTRP, it may be determined based on whether one or two TCI state(s) are indicated in the corresponding field based on the existing TCI state field in the scheduling DCI. In a similar manner, the operation may be performed as in the example in Proposal 3 above based on an indication value of the newly introduced (2-bit) new indication field.

FIG. 9 is a diagram illustrating signal transmission and reception between a UE and a network in a wireless communication system that supports the unified TCI framework according to an embodiment. A network may include one or more TRPs.

Referring to FIG. 9, the UE may receive configuration information from the network through RRC signaling (905). The configuration information may include information regarding field configuration of DCI. For example, the configuration information may include information (e.g., tciSelection-PresentInDCI) regarding whether a specific field (i.e., new indicator field) for dynamic selection of the TCI state is provided in the DCI.

The UE may receive the first DCI including the TCI field from the network (910). The first DCI may be a scheduling DCI or a non-scheduling DCI (e.g., DCI for beam update without scheduling). Assuming that the TCI field is 3-bit, each of the eight codepoints of the TCI field may be mapped to one or multiple TCI states. For example, a codepoint mapped to two TCI states may be associated with (i) {1st joint UL and DL TCI state, 2nd joint UL and DL TCI state} or (ii) {1st separate UL TCI state and/or DL TCI state, 2nd separate UL TCI state and/or DL TCI state}. The separate TCI state may individually indicate both the UL TCI state and the DL TCI state, or may indicate only one of the UL TCI state and the DL TCI state. From among the two TCI states, the 1st TCI state mapped to the corresponding codepoint may be related to the first signal/channel set, and the 2nd TCI state may be related to the second signal/channel set. For example, the first signal/channel set may include at least one of 1st PDSCH, 1st PDCCH (CORESET), 1st CSI-RS, 1st PUSCH, 1st (dedicated) PUCCH, and/or 1st SRS. The second signal/channel set may include at least one of 2nd PDSCH, 2nd PDCCH (CORESET), 2nd CSI-RS, 2nd PUSCH, 2nd (dedicated) PUCCH and/or 2nd SRS.

The UE may maintain two TCI states, and the maintained TCI states may be configured/updated based on the TCI field. For example, when a codepoint mapped to one TCI state is indicated through the TCI field, the UE may update only one of the two TCI states the UE maintains through the TCI field and maintain the other one as is without updating. For example, when codepoints mapped to two TCI states are indicated through the TCI field, the UE may update all of two TCI states the UE maintains through the TCI field. Application of the updated TCI state may begin when BAT time elapses from reception of the first DCI.

The UE may receive a second DCI scheduling the PDSCH (915). The UE may receive the PDSCH based on the second DCI (920).

When the second DCI is configured to include a specific field (i.e., new indicator field) through RRC signaling, TCI states to be used for reception of the PDSCH may be selected based on the specific field. For example, the first TCI state (STRP1) or the second TCI state (STRP2) from among the two TCI states maintained by the UE may be indicated through a specific field, and the first TCI state and the second TCI state may be indicated together (MTRP). When the BAT time elapses from ACK of the first DCI, the two TCI states that are based on a specific field in the second DCI are updated based on the TCI field of the first DCI, and when the BAT time does not elapse from the ACK of the first DCI, the two TCI states that are based on a specific field in the second DCI may be existing TCI states that are not updated based on the TCI field of the first DCI.

When the second DCI does not include a specific field, the UE may receive the PDSCH based on both TCI states the UE maintains.

When a PDSCH reception timing is before a time interval for quasi-co-location (QCL), the UE may receive the PDSCH by selecting the first TCI state from among the two TCI states the UE maintains.

FIG. 10 shows an example implementation of a UE operation according to at least some of the proposals described above. The disclosure is not limited to FIG. 10, and the above description may be referred to for understanding of FIG. 10.

Referring to FIG. 10, the UE may receive RRC signaling from the network (A05). RRC signaling may include information regarding whether a specific field related to TCI selection is provided in the DCI.

The UE may receive downlink control information (DCI) for downlink scheduling through a physical downlink control channel (PDCCH) (A10).

The UE may receive a physical downlink shared channel (PDSCH) based on DCI (A15).

Depending on RRC signaling (A05), DCI may or may not include a specific field.

Based on the DCI including a specific field, the UE may select at least one of a plurality of transmission configuration index (TCI) states maintained in the UE based on the specific field and receive the PDSCH based on the selected at least one TCI state.

Based on the DCI not including the specific field, the UE may receive the PDSCH based on all of the plurality of TCI states maintained in the UE.

Based on that a PDSCH reception timing is before a time interval for quasi-co-location (QCL), the UE may receive the PDSCH by selecting one of the plurality of TCI states. The UE may receive the PDSCH by selecting the first TCI state from among the plurality of TCI states.

The number of TCI states maintained by the UE may be 2.

The UE may receive another DCI including the TCI field. Based on the TCI field, at least one of a plurality of TCI states maintained in the UE may be configured or changed. Based on the codepoint of the TCI field being related to one TCI state, the UE may change one of the plurality of TCI states based on the codepoint of the TCI field and maintain the other TCI states without change. An application time of the TCI field may be determined based on a beam application time (BAT).

At least one of the plurality of TCI states may be related to a multi-transmission reception point (TRP) operation.

FIG. 11 shows an example implementation of a BS operation according to at least some of the proposals described above. The disclosure is not limited to FIG. 11, and the above description may be referred to for understanding of FIG. 11.

Referring to FIG. 11, the BS may transmit RRC signaling to the UE (B05). RRC signaling may include information regarding whether a specific field related to TCI selection is provided in the DCI.

The BS may transmit downlink control information (DCI) for downlink scheduling through a physical downlink control channel (PDCCH) to the UE (B10).

The BS may transmit a physical downlink shared channel (PDSCH) based on DCI to the UE (B15).

Depending on RRC signaling (B05), DCI may or may not include a specific field.

Based on the DCI including a specific field, the BS may select at least one of a plurality of transmission configuration index (TCI) states maintained in the UE based on the specific field and transmit the PDSCH based on the selected at least one TCI state.

Based on the DCI not including the specific field, the BS may transmit the PDSCH based on the plurality of TCI states maintained in the UE.

Based on that a PDSCH transmission point is before a time interval for quasi-co-location (QCL), the BS may transmit the PDSCH by selecting one of the plurality of TCI states. The BS may transmit the PDSCH by selecting the first TCI state from among the plurality of TCI states.

The number of TCI states maintained by the UE may be 2.

The BS may transmit another DCI including the TCI field. Based on the TCI field, at least one of the plurality of TCI states maintained in the UE may be configured or changed. Based on the codepoint of the TCI field being related to one TCI state, one of the plurality of TCI states may be changed based on the codepoint of the TCI field and the others may be maintained without change. An application time of the TCI field may be determined based on a beam application time (BAT).

At least one of the plurality of TCI states may be related to a multi-transmission reception point (TRP) operation.

FIG. 12 illustrates a communication system 1 applied to the disclosure.

Referring to FIG. 12, a communication system 1 applied to the disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the disclosure.

FIG. 13 illustrates wireless devices applicable to the disclosure.

Referring to FIG. 13, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 12.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 14 illustrates another example of a wireless device applied to the disclosure. The wireless device may be implemented in various forms according to a use-case/service (refer to FIG. 12).

Referring to FIG. 14, wireless devices 100 and 200 may correspond to the wireless devices 100 and 200 of FIG. 13 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 13. For example, the transceiver(s) 114 may include the one or more transceivers 106 and 206 and/or the one or more antennas 108 and 208 of FIG. 13. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 12), the vehicles (100b-1 and 100b-2 of FIG. 12), the XR device (100c of FIG. 12), the hand-held device (100d of FIG. 12), the home appliance (100e of FIG. 12), the IoT device (100f of FIG. 12), a digital broadcast terminal, a hologram device, a public safety device, an MTC device, a medicine device, a fintech device (or a finance device), a security device, a climate/environment device, the AI server/device (400 of FIG. 12), the BSs (200 of FIG. 12), a network node, etc. The wireless device may be used in a mobile or fixed place according to a use-example/service.

In FIG. 14, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 15 illustrates a vehicle or an autonomous driving vehicle applied to the disclosure. The vehicle or autonomous driving vehicle may be implemented by a mobile robot, a car, a train, a manned/unmanned Aerial Vehicle (AV), a ship, etc.

Referring to FIG. 15, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 14, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

FIG. 16 is a diagram illustrating a DRX operation of a UE according to an embodiment of the disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC_CONNECTED state. The UE performs DRX to receive a paging signal discontinuously in the RRC_IDLE state and the RRC_INACTIVE state. DRX in the RRC_CONNECTED state (RRC_CONNECTED DRX) will be described below.

Referring to FIG. 16, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the afore-described/proposed procedures and/or methods. For example, when DRX is configured, PDCCH reception occasions (e.g., slots with PDCCH SSs) may be configured discontinuously according to a DRX configuration in the disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in the disclosure. Irrespective of whether DRX is configured, PDCCH monitoring may be restricted during a time period configured as a measurement gap.

Table 9 describes a DRX operation of a UE (in the RRC_CONNECTED state). Referring to Table 9, DRX configuration information is received by higher-layer signaling (e.g., RRC signaling), and DRX ON/OFF is controlled by a DRX command from the MAC layer. Once DRX is configured, the UE may perform PDCCH monitoring discontinuously in performing the aforedescribed/proposed procedures and/or methods.

[Table 9]

| | Type of signals | UE procedure |
|---|---|---|
| 1st step | RRC signalling (MAC-CellGroupConfig) | - Receive DRX configuration information |
| 2nd Step | MAC CE ((Long) DRX command MAC CE) | - Receive DRX command |
| 3rd Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX.

- Value of drx-OnDurationTimer: defines the duration of the starting period of the DRX cycle.
- Value of drx-InactivityTimer: defines the duration of a time period during which the UE is awake after a PDCCH occasion in which a PDCCH indicating initial UL or DL data has been detected
- Value of drx-HARQ-RTT-TimerDL: defines the duration of a maximum time period until a DL retransmission is received after reception of a DL initial transmission.
- Value of drx-HARQ-RTT-TimerDL: defines the duration of a maximum time period until a grant for a UL retransmission is received after reception of a grant for a UL initial transmission.
- drx-LongCycleStartOffset: defines the duration and starting time of a DRX cycle.
- drx-ShortCycle (optional): defines the duration of a short DRX cycle.

When any of drx-OnDurationTimer, drx-InactivityTimer, drx-HARQ-RTT-TimerDL, and drx-HARQ-RTT-TimerDL is running, the UE performs PDCCH monitoring in each PDCCH occasion, staying in the awake state.

The above-described embodiments correspond to combinations of elements and features of the disclosure in prescribed forms. And, the respective elements or features may be considered as selective unless they are explicitly mentioned. Each of the elements or features can be implemented in a form failing to be combined with other elements or features. Moreover, it is able to implement an embodiment of the disclosure by combining elements and/or features together in part. A sequence of operations explained for each embodiment of the disclosure can be modified. Some configurations or features of one embodiment can be included in another embodiment or can be substituted for corresponding configurations or features of another embodiment. And, it is apparently understandable that an embodiment is configured by combining claims failing to have relation of explicit citation in the appended claims together or can be included as new claims by amendment after filing an application.

Those skilled in the art will appreciate that the disclosure may be carried out in other specific ways than those set forth herein without departing from the spirit and essential characteristics of the disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

## INDUSTRIAL APPLICABILITY

The disclosure is applicable to UEs, BSs, or other apparatuses in a wireless mobile communication system.

## Claims

**1.** A method of receiving a signal by a user equipment (UE) in a wireless communication system, the method comprising:

receiving downlink control information (DCI) for downlink scheduling through a physical downlink control channel (PDCCH); and
receiving a physical downlink shared channel (PDSCH) based on the DCI,
wherein, based on the DCI including a specific field, the UE:

selects at least one of a plurality of transmission configuration index (TCI) states maintained in the UE, based on the specific field, and
receives the PDSCH based on the selected at least one TCI state, and

wherein, based on the DCI not including the specific field, the UE:
receives the PDSCH based on all of the plurality of TCI states maintained in the UE.

**2.** The method of claim 1, further comprising:
receiving information regarding whether the DCI includes the specific field through radio resource control (RRC) signaling.

**3.** The method of claim 1, wherein, based on that a reception timing of the PDSCH is prior to a time interval for quasi-co-location (QCL), the UE receives the PDSCH by selecting one of the plurality of TCI states.

**4.** The method of claim 3, wherein the UE receives the PDSCH by selecting a first TCI state from among the plurality of TCI states.

**5.** The method of claim 1, wherein a number of TCI states maintained by the UE is 2.

**6.** The method of claim 1, further comprising:

receiving another DCI including a TCI field,
wherein at least one of the plurality of TCI states maintained in the UE is configured or changed based on the TCI field.

**7.** The method of claim 6, wherein, based on a codepoint of the TCI field being related to one TCI state,
the UE changes one of the plurality of TCI states based on the codepoint of the TCI field and maintains remaining TCI states without change.

**8.** The method of claim 6, wherein an application time of the TCI field is determined based on a beam application time (BAT).

9. The method of claim 1, wherein at least one of the plurality of TCI states is related to a multi-transmission reception point (TRP) operation.

10. A computer-readable recording medium recording a program for performing the method of claim 1.

11. A device for wireless communication, the device comprising:

a memory configured to store instructions; and
a processor operating by executing the instructions,
wherein an operation of the processor includes:

receiving downlink control information (DCI) for downlink scheduling through a physical downlink control channel (PDCCH); and
receiving a physical downlink shared channel (PDSCH) based on the DCI,
wherein, based on the DCI including a specific field, the processor:

selects at least one of a plurality of transmission configuration index (TCI) states maintained in the device based on the specific field, and
receives the PDSCH based on the selected at least one TCI state, and

wherein, based on the DCI not including the specific field, the processor:
receives the PDSCH based on all of the plurality of TCI states maintained in the device.

12. The device of claim 11, further comprising:

a transceiver configured to transmit or receive a wireless signal under control of the processor,
wherein the device is a user equipment (UE) in a wireless communication system.

13. The device of claim 11, wherein the device is an application specific integrated circuit (ASIC) or a digital signal processing device, configured to control a user equipment (UE).

14. A method of transmitting a signal by a base station (BS) in a wireless communication system, the method comprising:

transmitting downlink control information (DCI) for downlink scheduling through a physical downlink control channel (PDCCH) to a user equipment (UE); and
transmitting a physical downlink shared channel (PDSCH) based on the DCI to the UE,
wherein, based on the DCI including a specific field, the BS:

selects at least one of a plurality of transmission configuration index (TCI) states maintained in the UE based on the specific field, and
transmits the PDSCH based on the selected at least one TCI state, and

wherein, based on the DCI not including the specific field, the BS:
transmits the PDSCH based on the plurality of TCI states maintained in the UE.

15. A base station (BS) for wireless communication, the BS comprising:

a memory configured to store instructions; and
a processor configured to perform operations by executing the instructions,
wherein the operations of the processor include:

transmitting downlink control information (DCI) for downlink scheduling through a physical downlink control channel (PDCCH) to a user equipment (UE); and
transmitting a physical downlink shared channel (PDSCH) based on the DCI to the UE,
wherein, based on the DCI including a specific field, the BS:

selects at least one of a plurality of transmission configuration index (TCI) states maintained in the UE based on the specific field, and

transmits the PDSCH based on the selected at least one TCI state, and

wherein, based on the DCI not including the specific field, the BS:
transmits the PDSCH based on the plurality of TCI states maintained in the UE.

FIG. 1

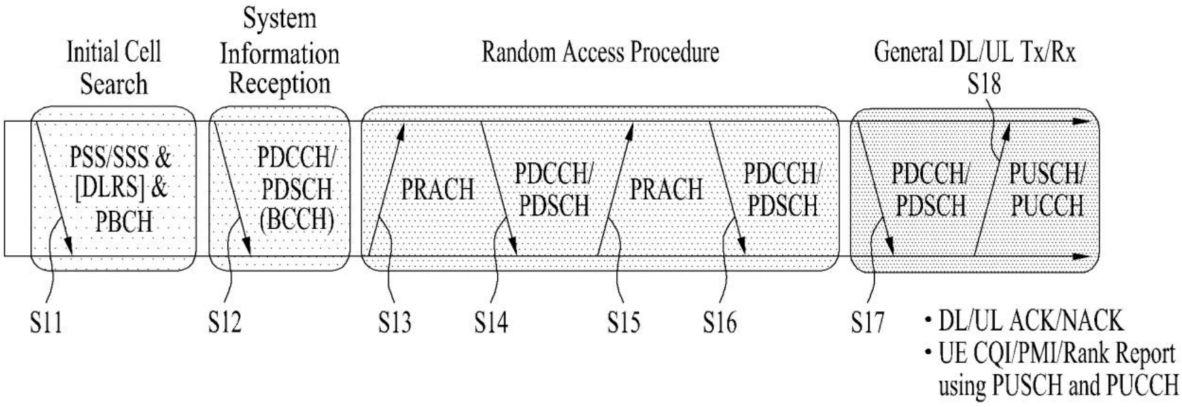
Initial Cell Search
System Information Reception
Random Access Procedure
General DL/UL Tx/Rx
S18
PSS/SSS & [DLRS] & PBCH
PDCCH/ PDSCH (BCCH)
PRACH
PDCCH/ PDSCH
PRACH
PDCCH/ PDSCH
PDCCH/ PDSCH
PUSCH/ PUCCH
S11
S12
S13
S14
S15
S16
S17
• DL/UL ACK/NACK
• UE CQI/PMI/Rank Report using PUSCH and PUCCH

FIG. 2

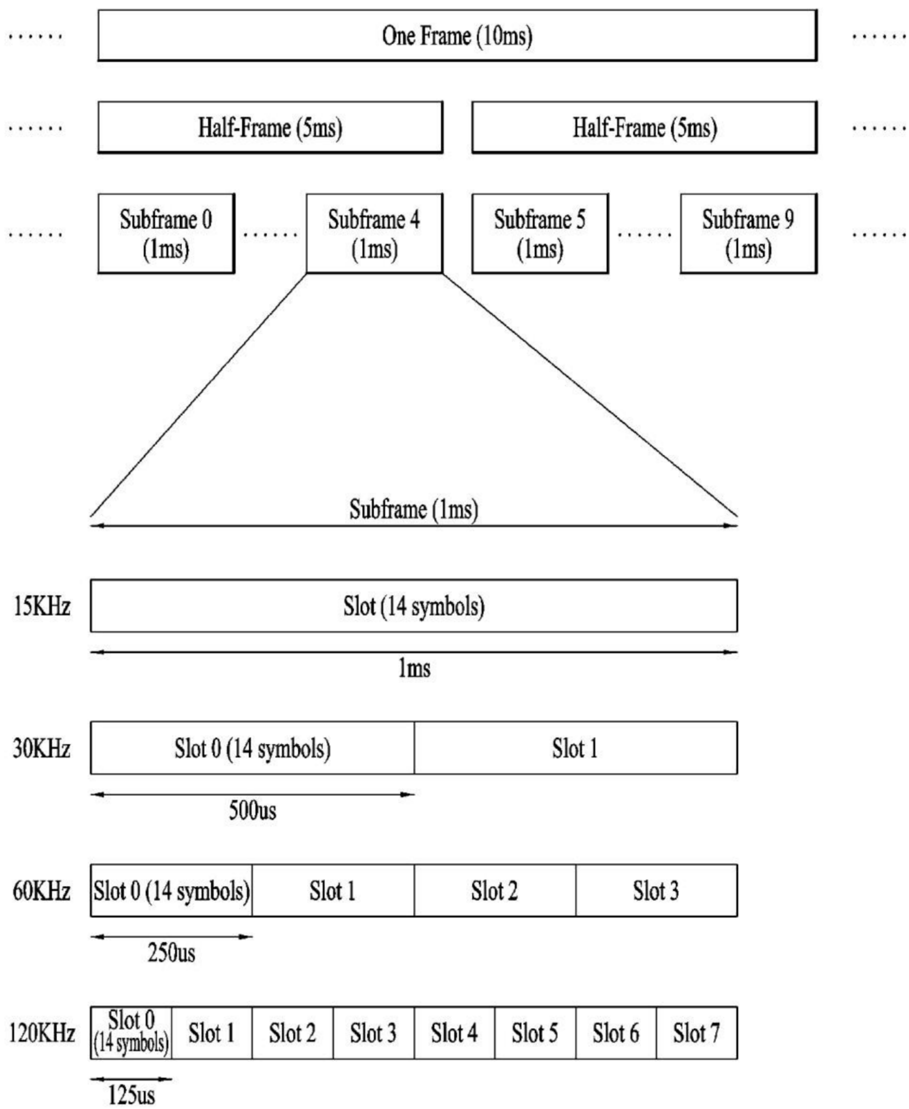
One Frame (10ms)
Half-Frame (5ms)
Half-Frame (5ms)
Subframe 0 (1ms)
Subframe 4 (1ms)
Subframe 5 (1ms)
Subframe 9 (1ms)
Subframe (1ms)
15KHz
Slot (14 symbols)
1ms
30KHz
Slot 0 (14 symbols)
Slot 1
500us
60KHz
Slot 0 (14 symbols)
Slot 1
Slot 2
Slot 3
250us
120KHz
Slot 0 (14 symbols)
Slot 1
Slot 2
Slot 3
Slot 4
Slot 5
Slot 6
Slot 7
125us

FIG. 3

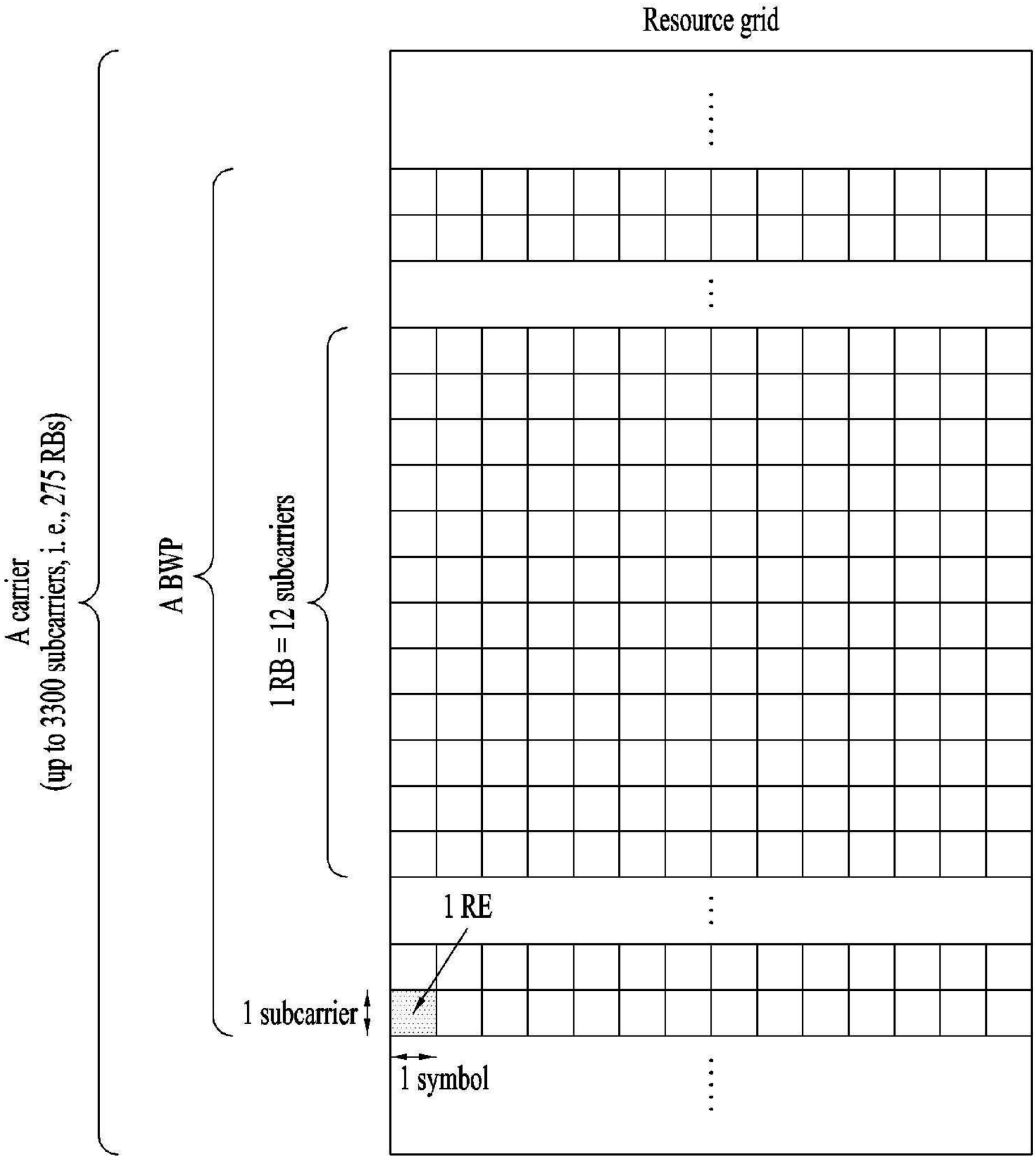
Resource grid
A carrier
(up to 3300 subcarriers, i. e., 275 RBs)
A BWP
1 RB = 12 subcarriers
1 RE
1 subcarrier
1 symbol

FIG. 4

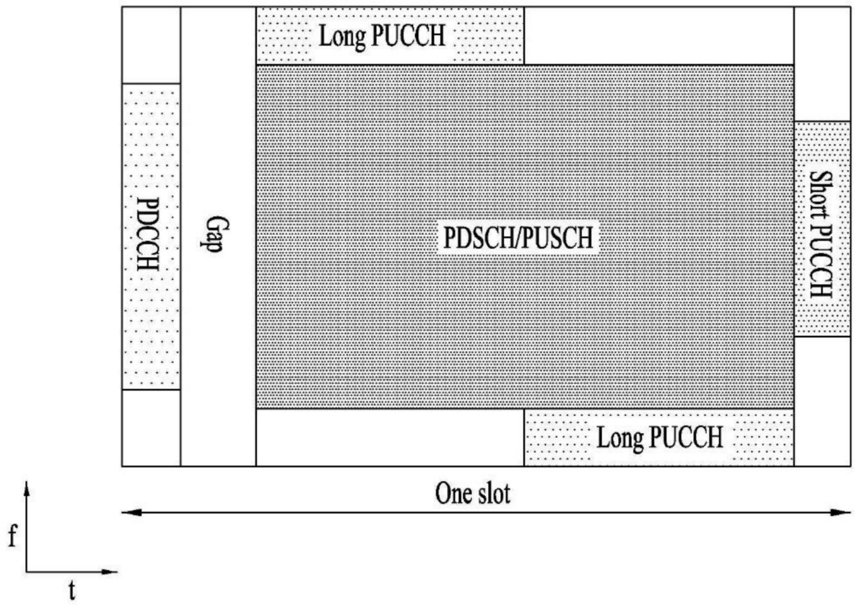
Long PUCCH
PDCCH
Gap
PDSCH/PUSCH
Short PUCCH
Long PUCCH
One slot
f
t

FIG. 5

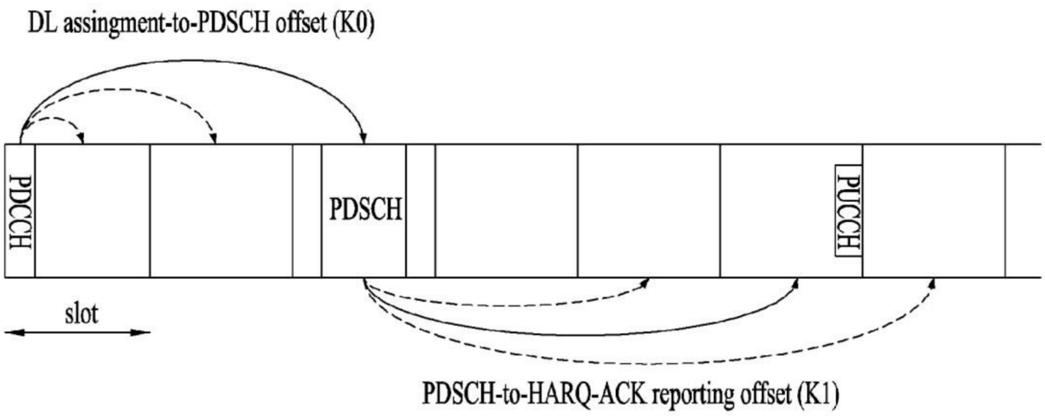
DL assingment-to-PDSCH offset (K0)
PDCCH
PDSCH
PUCCH
slot
PDSCH-to-HARQ-ACK reporting offset (K1)

**FIG. 6**

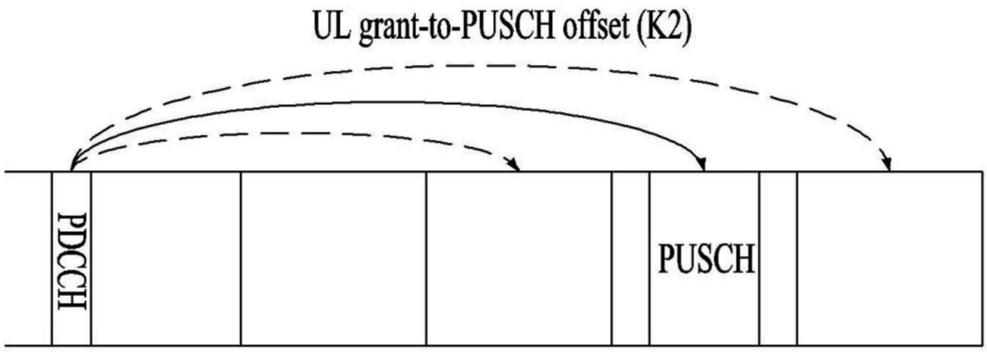
UL grant-to-PUSCH offset (K2)
PDCCH
PUSCH

**FIG. 7**

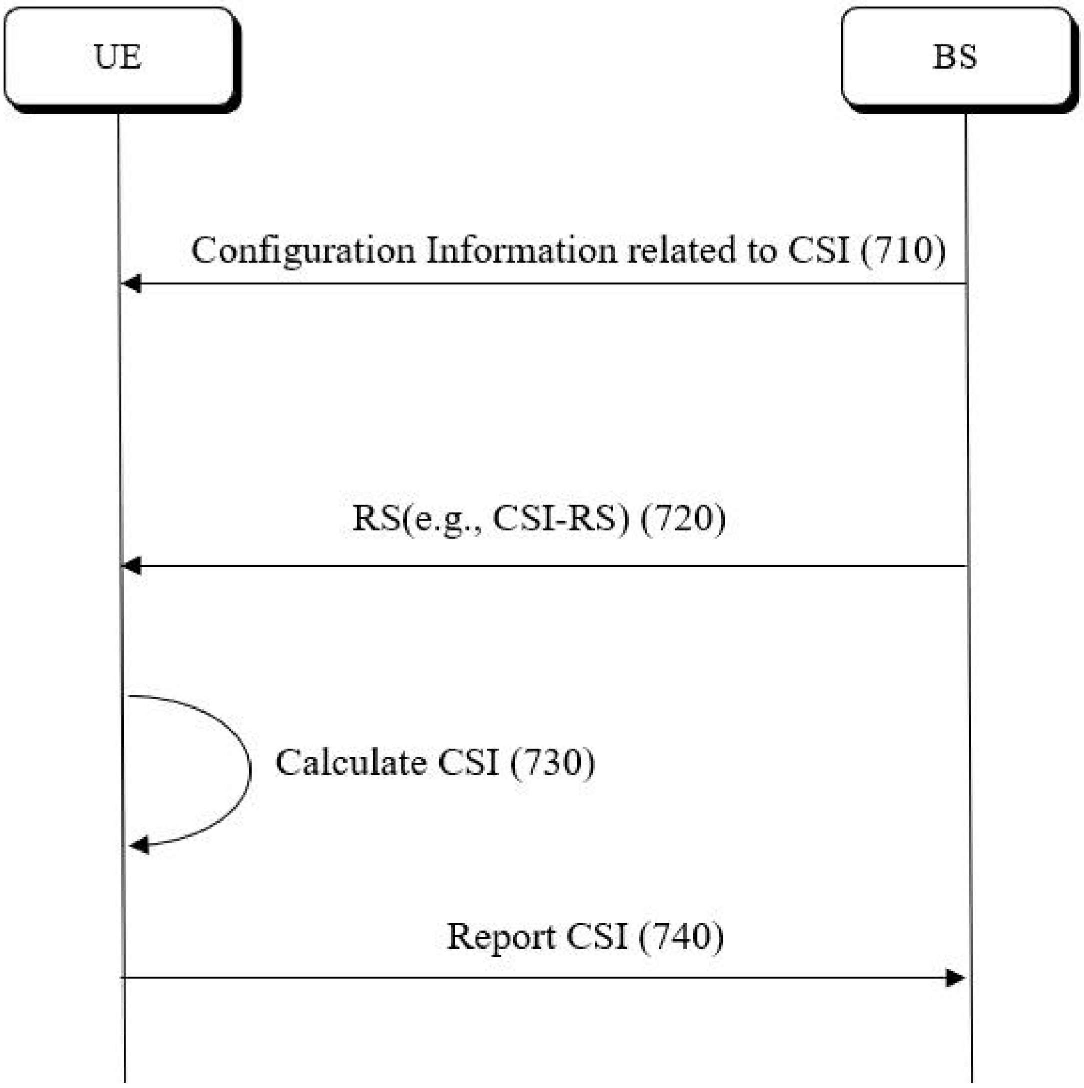
UE
BS
Configuration Information related to CSI (710)
RS(e.g., CSI-RS) (720)
Calculate CSI (730)
Report CSI (740)

FIG. 8

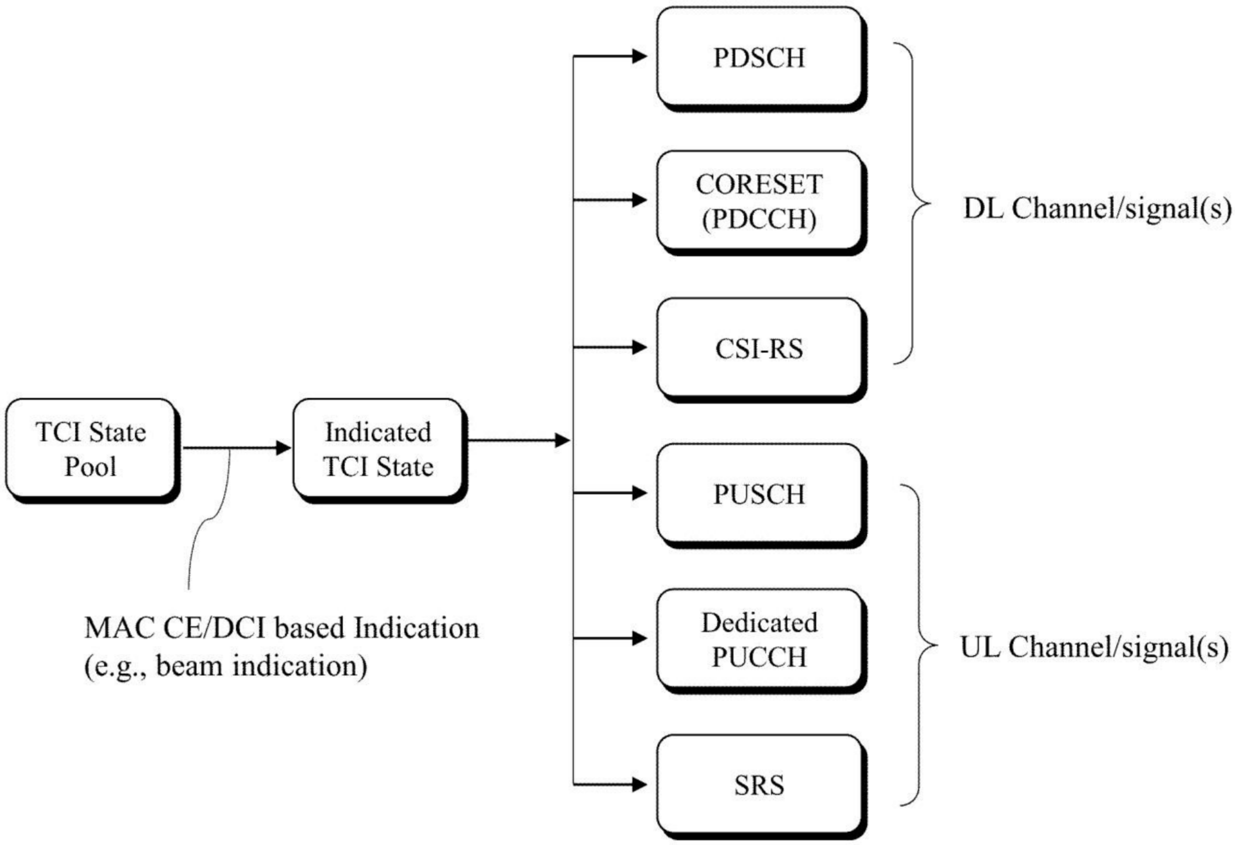
PDSCH
CORESET (PDCCH)
CSI-RS
DL Channel/signal(s)
TCI State Pool
Indicated TCI State
PUSCH
Dedicated PUCCH
SRS
UL Channel/signal(s)
MAC CE/DCI based Indication (e.g., beam indication)

FIG. 9

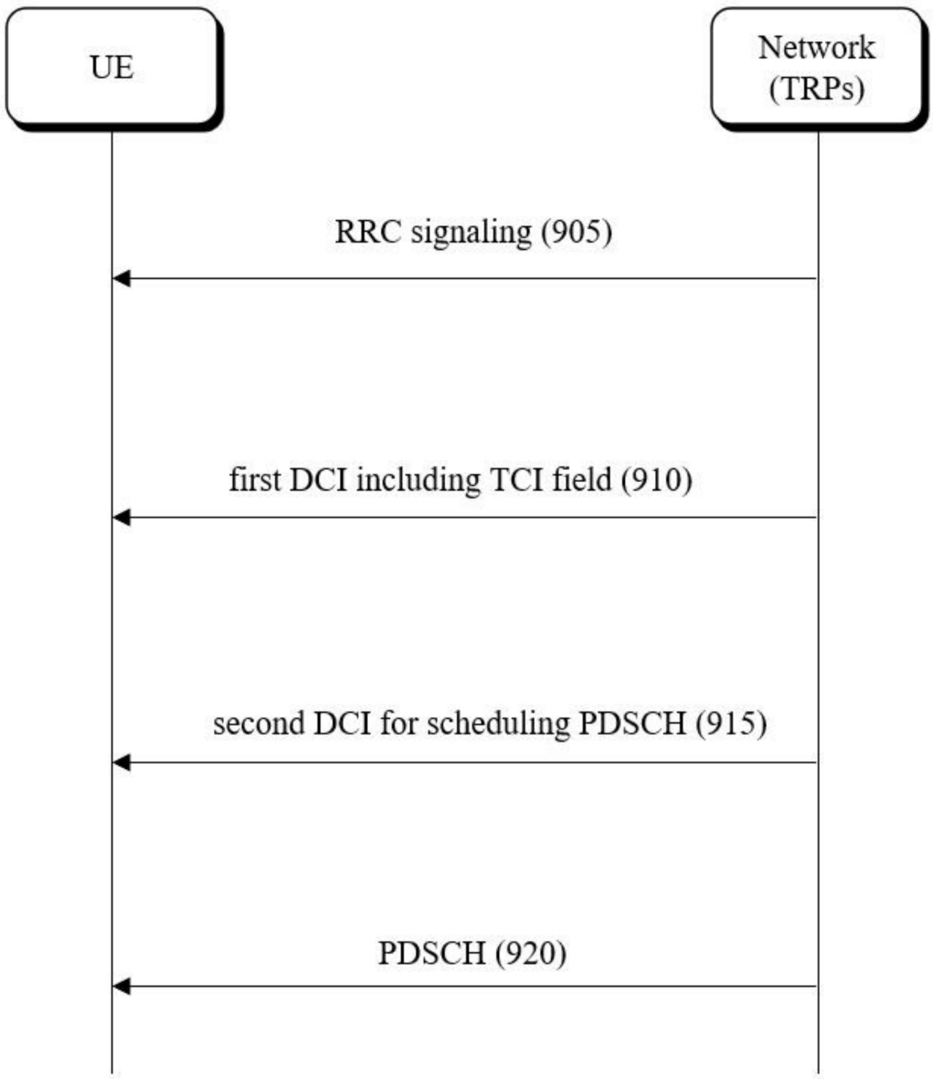
UE
Network
(TRPs)
RRC signaling (905)
first DCI including TCI field (910)
second DCI for scheduling PDSCH (915)
PDSCH (920)

FIG. 10

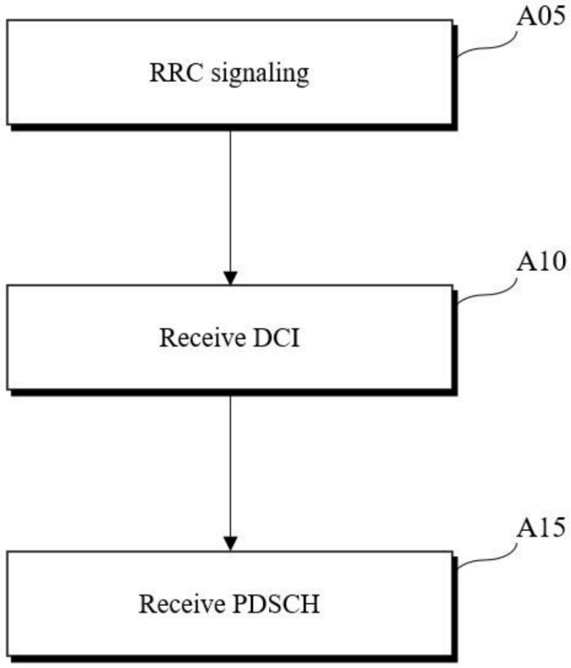
RRC signaling
A05
Receive DCI
A10
Receive PDSCH
A15

FIG. 11

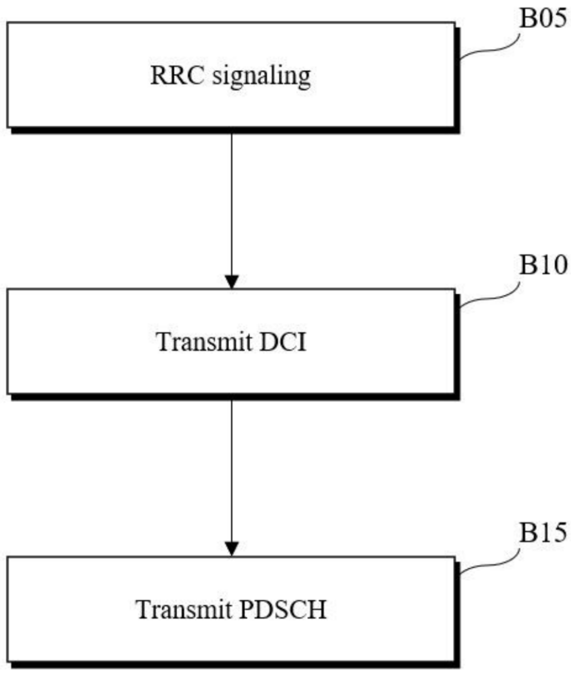
RRC signaling
B05
Transmit DCI
B10
Transmit PDSCH
B15

# FIG. 12

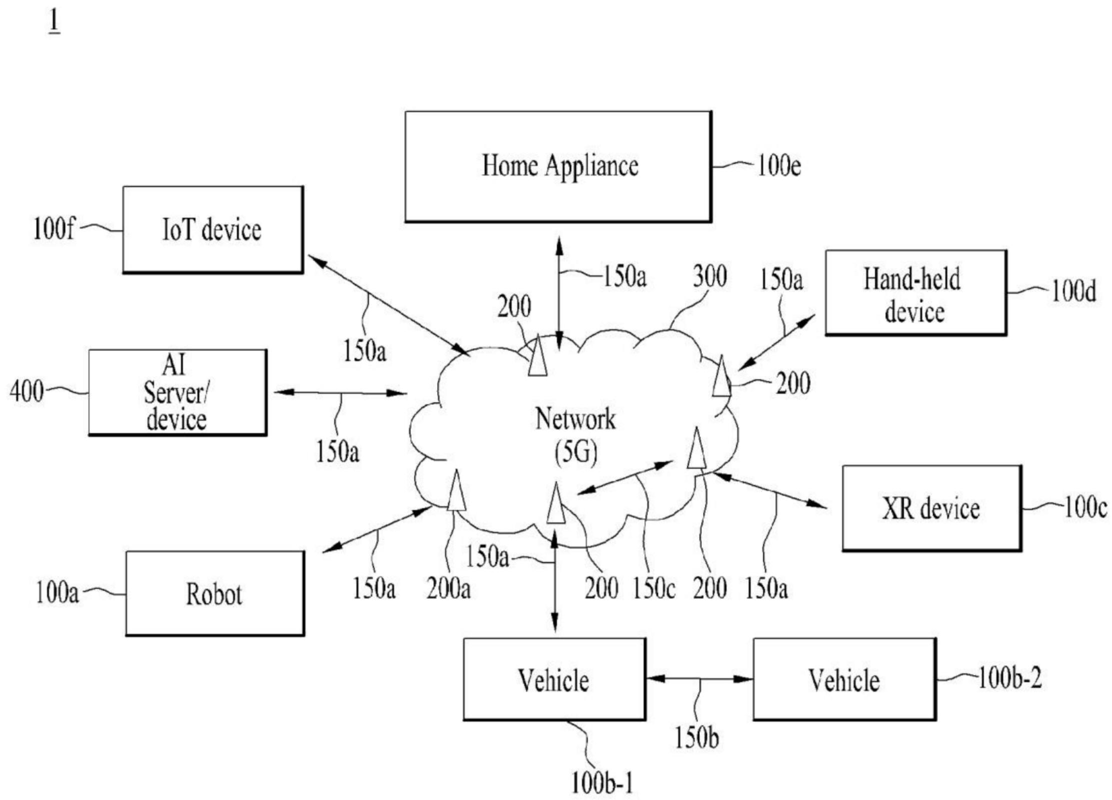
1
Home Appliance
100e
IoT device
100f
150a
300
Hand-held device
100d
200
AI Server/ device
400
Network (5G)
XR device
100c
Robot
100a
200a
150c
Vehicle
100b-1
100b-2
150b

# FIG. 13

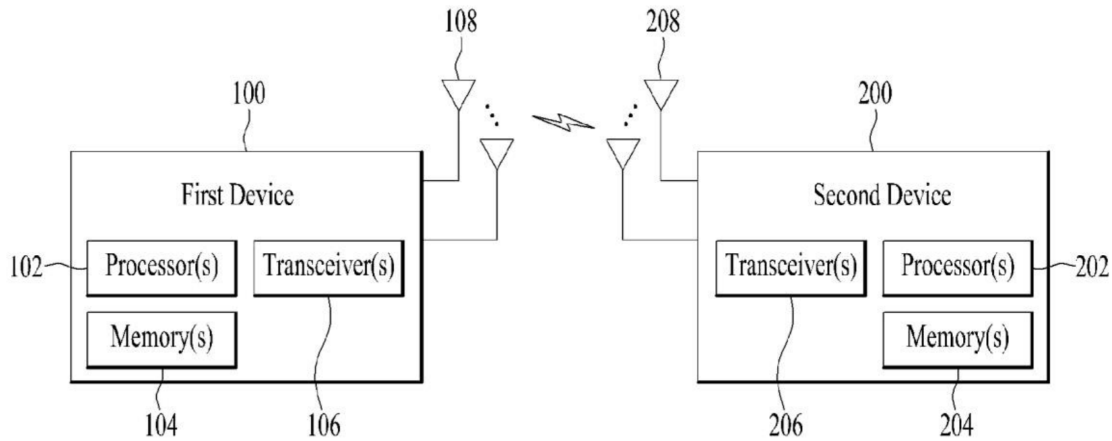
108
208
100
200
First Device
Second Device
102
Processor(s)
Transceiver(s)
Memory(s)
202
104
106
206
204

# FIG. 14

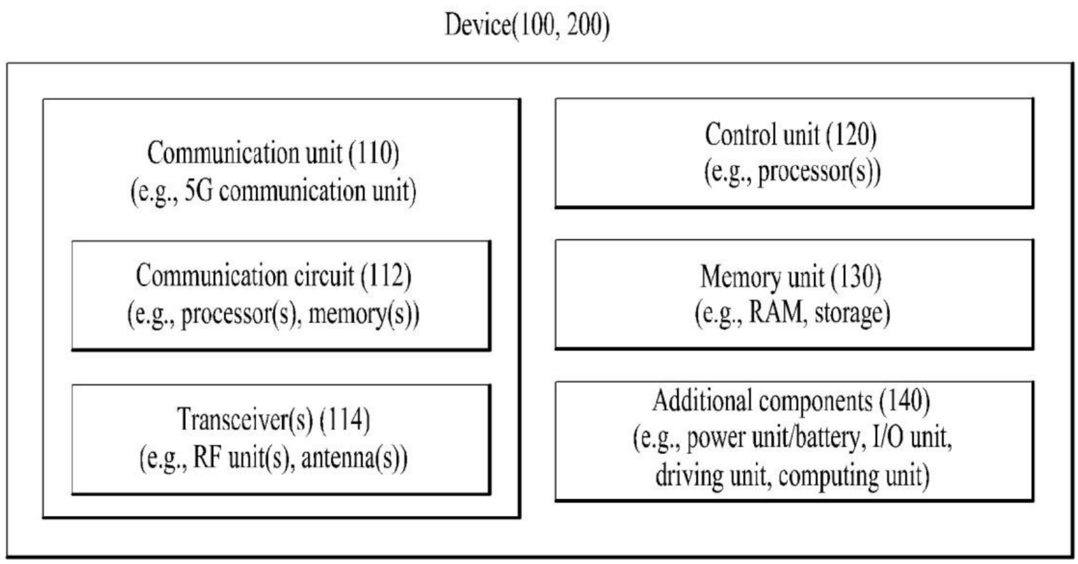
Device(100, 200)
Communication unit (110)
(e.g., 5G communication unit)
Communication circuit (112)
(e.g., processor(s), memory(s))
Transceiver(s) (114)
(e.g., RF unit(s), antenna(s))
Control unit (120)
(e.g., processor(s))
Memory unit (130)
(e.g., RAM, storage)
Additional components (140)
(e.g., power unit/battery, I/O unit,
driving unit, computing unit)

# FIG. 15

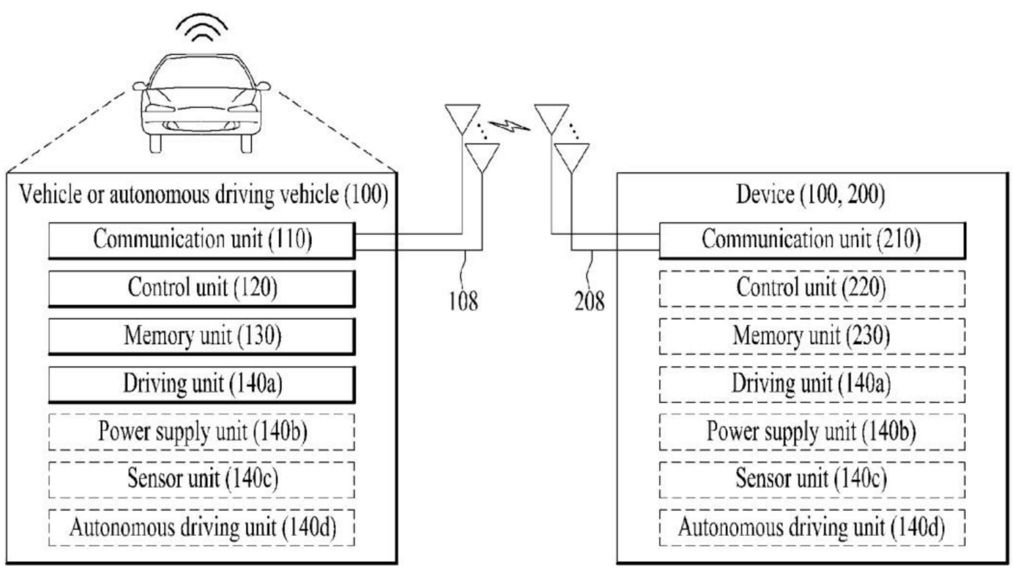
Vehicle or autonomous driving vehicle (100)
Communication unit (110)
Control unit (120)
Memory unit (130)
Driving unit (140a)
Power supply unit (140b)
Sensor unit (140c)
Autonomous driving unit (140d)
108
208
Device (100, 200)
Communication unit (210)
Control unit (220)
Memory unit (230)
Driving unit (140a)
Power supply unit (140b)
Sensor unit (140c)
Autonomous driving unit (140d)

FIG. 16

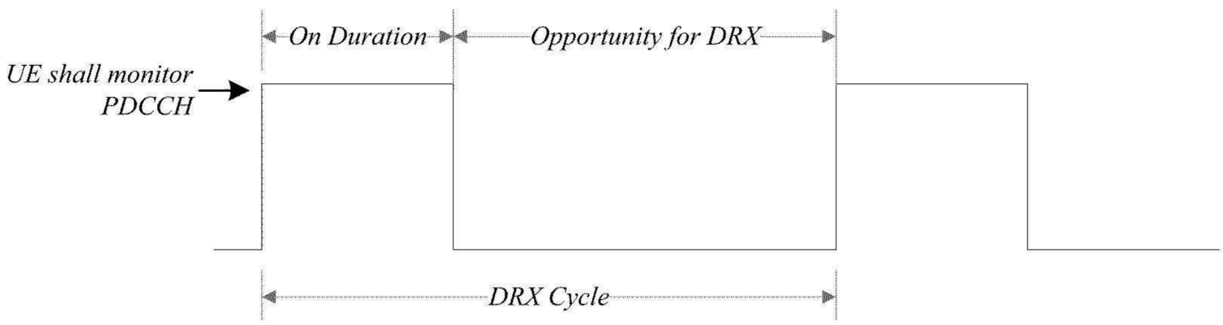
On Duration
Opportunity for DRX
UE shall monitor PDCCH
DRX Cycle